# EUROPÄISCHE PATENTSCHRIFT

(11) **EP 3 111 107 B1**
(45) Veröffentlichungstag und Bekanntmachung des Hinweises auf die Patenterteilung: **13.09.2017**
(21) Anmeldenummer: 15707603.5
(22) Anmeldetag: 26.02.2015
(51) Int. Cl.: F16G 1/08, F16G 1/28, F16G 5/06, F16G 5/18, B65G 15/32, B65G 15/50, F16G 3/10

(54) **ZUGKÖRPER**
TRACTION MEMBER
CORPS DE TRACTION

(30) Priorität: 27.02.2014 AT 1372014
(43) Veröffentlichungstag der Anmeldung: 04.01.2017
(73) Patentinhaber: Contaxx GmbH, 6440 Brunnen (CH)
(72) Erfinder: SWITZENY, Kurt, CH-6440 Brunnen (CH)
(74) Vertreter: Puchberger & Partner Patentanwälte
(86) Internationale Anmeldenummer: PCT/EP2015/054079
(87) Internationale Veröffentlichungsnummer: WO 2015/128436

(56) Entgegenhaltungen:
- DE-C1- 4 340 898
- JP-A- S61 203 014
- US-A1- 2009 126 296

## Beschreibung

Die Erfindung betrifft einen Zugkörper, insbesondere ein Zugband, einen Zugriemen oder ein Zugseil, der quer zu seiner Längserstreckungsrichtung elastisch verformbar und gegebenenfalls um eine Umlenkrolle umlenkbar ist, wobei der Zugkörper eine erste Zugelementanordnung und zumindest eine weitere Zugelementanordnung umfasst, wobei die Zugelementanordnungen jeweils seitlich, quer zur Längserstreckungsrichtung miteinander verbunden sind und wobei die Zugelementanordnungen jeweils fluchtend aneinander gereihte Endabschnitte umfassen. Insbesondere betrifft die Erfindung einen Zugkörper, der aus mehreren Zugelementen zusammengesetzt ist und eine hohe Zugfestigkeit aufweist. Der Zugkörper ist insbesondere dazu geeignet und/oder eingerichtet, als Zugband, Zugriemen oder Zugseil für hohe Lasten und hohe Kräfte eingesetzt zu werden. Beispielsweise treten bei der Beförderung von Lasten auf Riemenförderern hohe Kräfte auf. Ferner ist zur Übertragung von Kräften, beispielsweise in einer Kraftwerksanlage, eine Übertragung hoher Drehmomente und hoher Kräfte notwendig. Der erfindungsgemäße Zugkörper eignet sich insbesondere auch für Förderbänder und als Ersatz für umlaufende oder ruhende Seile in Transportsystemen oder Baugruppen, bei denen hohe Kräfte auftreten.

Gemäß Stand der Technik sind Vorrichtungen bekannt, die als Zugband, Zugriemen oder Zugseil verwendet werden können. Beispielsweise sind Stahlseile bekannt, die aus mehreren Litzen zusammengesetzt sind und gegebenenfalls, zur Bildung eines endlosen Riemens, verspleißt sind, sodass die beiden Enden des Stahlseils zusammengeführt und miteinander verbunden sind. Nachteilig an Stahlseilen ist, dass diese zu Korrosion neigen. Darüber hinaus sind Stahlseile im Spleißbereich verdicktwodurch sich ein ungleichmäßiger Zugkörper ergibt. Ferner haben Stahlseile einen runden Querschnitt. Dies ist nachteilig, da zur Erhöhung der maximalen übertragbaren Zugkraft der Querschnitt in alle Richtungen vergrößert werden muss. Dies begrenzt die maximale übertragbare Zugkraft von umlenkbaren Stahlseilen, da ab einer gewissen Dicke des Stahlseils eine Umlenkung um eine Umlenkrolle technisch sehr aufwändig ist. Ferner sind Riemen aus faserverstärkten Matten bekannt. Diese Matten werden beispielsweise für Transportförderer eingesetzt. Es handelt sich dabei um bandförmige Matten mit einer begrenzten Länge, deren Enden miteinander verbunden werden, um einen endlosen Riemen zu bilden. Diese Verbindung geschieht meist durch flächiges Verkleben. Nachteil dieser Konstruktion ist, dass die Verklebung eine Schwachstelle darstellt. Darüber hinaus ist im Bereich der Verklebung der Riemen verdickt, wodurch der Zugkörper keine gleichmäßige Form aufweist. Ferner sind Bauteile aus glasfaserverstärktem Kunststoff bekannt, die beispielsweise als Endlosprodukte extrudiert werden. Es ist bekannt, dass glasfaserverstärkter Kunststoff eine hohe Zähigkeit und eine hohe Zugfestigkeit aufweist. Aus diesem Grund wird dieses Material zur Bildung von hochbelasteten Teilen eingesetzt. Die effiziente Extrusion von Glasfaserprofilen ist jedoch in ihrer Querschnittsgröße begrenzt. Aus diesem Grund können keine Förderriemen in beliebiger Breite hergestellt werden. Auch die maximale übertragbare Zugkraft eines solchen extrudierten Körpers ist durch die Extruderdüsengröße beschränkt.

Zugkörper sind aus der DE 43 40 898 C1, der JP S61 203014 A und der US 2009/126296 A1 bekannt.

Aufgabe der Erfindung ist es nun, einen Zugkörper, insbesondere ein Zugband, einen Zugriemen oder ein Zugseil für hohe Belastungen zu schaffen,
- der eine hohe Zugfestigkeit aufweist,
- der dennoch quer zur Längserstreckungsrichtung elastisch verformbar ist, sodass der Zugkörper beispielsweise um eine Umlenkrolle umlenkbar oder durch eine Antriebsrolle mit ausreichendem Umschlingungswinkel antreibbar ist,
- der eine geringe Korrosionsneigung aufweist,
- und dessen Querschnittsform oder Profilform frei gestaltbar ist, um beispielsweise Riemen, Keilriemen, Zahnriemen, Seile, Bänder oder ähnliche Körper bilden zu können.
Die erfindungsgemäße Aufgabe wird insbesondere durch die Merkmalskombination der unabhängigen Patentansprüche gelöst.

Die Erfindung betrifft beispielsweise einen Zugkörper, insbesondere Zugband, Zugriemen oder Zugseil, der quer zu seiner Längserstreckungsrichtung elastisch verformbar und gegebenenfalls um eine Umlenkrolle umlenkbar ist, wobei folgende Komponenten vorgesehen sind: eine erste Zugelementanordnung umfassend ein erstes langgestrecktes Zugelement, dessen beide Enden zueinander weisend entlang der Längserstreckungsrichtung im Wesentlichen fluchtend aneinandergereiht sind, wobei zwischen den Enden der ersten Zugelementanordnung ein erster Stoßbereich vorgesehen ist, eine zweite Zugelementanordnung umfassend ein zweites langgestrecktes Zugelement, dessen beide Enden zueinander weisend entlang der Längserstreckungsrichtung im Wesentlichen fluchtend aneinandergereiht sind, wobei zwischen den Enden der zweite Zugelementanordnung ein zweiter Stoßbereich vorgesehen ist, wobei die erste Zugelementanordnung und die zweite Zugelementanordnung parallel nebeneinander verlaufend seitlich, also quer zur Längserstreckungsrichtung, miteinander verbunden sind, und/oder wobei der erste Stoßbereich der ersten Zugelementanordnung gegenüber dem zweiten Stoßbereich der zweiten Zugelementanordnung in Längserstreckungsrichtung versetzt angeordnet ist, sodass der Stoßbereich der einen Zugelementanordnung jeweils von einem Zugelement der anderen Zugelementanordnung überlappt und somit kräftemäßig überbrückt ist. Diese Ausführung betrifft beispielsweise einen endlosen Riemen, bei dem mehrere Zugelementanordnungen vorgesehen sind, wobei pro Zugelementanordnung lediglich ein Zugelement vorgesehen ist, dessen beide Enden zueinander weisend über eine weiteres Zugelement miteinander verbunden sind.

Als seitlich wird, wenn nicht anders angegeben, eine Richtung quer zur Längserstreckungsrichtung des Zugkörpers definiert.

Die Erfindung betrifft beispielsweise einen Zugkörper, insbesondere Zugband, Zugriemen oder Zugseil, der quer zu seiner Längserstreckungsrichtung elastisch verformbar und gegebenenfalls um eine Umlenkrolle umlenkbar ist, umfassend: eine erste Zugelementanordnung mit zwei oder mehr langgestreckten ersten Zugelementen, die entlang der Längserstreckungsrichtung im Wesentlichen fluchtend aneinandergereiht sind, wobei zwischen den ersten Zugelementen jeweils ein erster Stoßbereich vorgesehen ist, eine zweite Zugelementanordnung mit zwei oder mehr langgestreckten zweiten Zugelementen, die entlang der Längserstreckungsrichtung im Wesentlichen fluchtend aneinandergereiht sind, wobei zwischen den zweiten Zugelementen jeweils ein zweiter Stoßbereich vorgesehen ist, wobei die erste Zugelementanordnung und die zweite Zugelementanordnung parallel nebeneinander verlaufend seitlich, also quer zur Längserstreckungsrichtung, miteinander verbunden sind, und/oder wobei die ersten Stoßbereiche der ersten Zugelementanordnung gegenüber den zweiten Stoßbereichen der zweiten Zugelementanordnung in Längserstreckungsrichtung versetzt angeordnet sind, sodass die Stoßbereiche der einen Zugelementanordnung jeweils von einem Zugelement der anderen Zugelementanordnung überlappt und somit kräftemäßig überbrückt sind.
Diese Ausführung betrifft beispielsweise einen endlosen Riemen oder einen langgestreckten Zugkörper, bei dem mehrere Zugelementanordnungen vorgesehen sind, wobei pro Zugelementanordnung mehrere Zugelemente aneinandergereiht sind.

Die Erfindung betrifft beispielsweise einen Zugkörper, insbesondere Zugband, Zugriemen oder Zugseil, der quer zu seiner Längserstreckungsrichtung elastisch verformbar und gegebenenfalls um eine Umlenkrolle umlenkbar ist, wobei folgende Komponenten vorgesehen sind: eine erste Zugelementanordnung umfassend zwei oder mehr erste Endabschnitte eines oder mehrerer langgestreckter erster Zugelemente, wobei die ersten Endabschnitte entlang der Längserstreckungsrichtung im Wesentlichen fluchtend aneinandergereiht sind, wobei zwischen jeweils zwei ersten Endabschnitten ein erster Stoßbereich vorgesehen ist, eine zweite Zugelementanordnung umfassend zwei oder mehr zweite Endabschnitte eines oder mehrerer langgestreckter zweiter Zugelemente, wobei die zweiten Endabschnitte entlang der Längserstreckungsrichtung im Wesentlichen fluchtend aneinandergereiht sind, wobei zwischen jeweils zwei zweiten Endabschnitten ein zweiter Stoßbereich vorgesehen ist, wobei die erste Zugelementanordnung und die zweite Zugelementanordnung parallel nebeneinander verlaufend seitlich, also quer zur Längserstreckungsrichtung, miteinander verbunden sind, und/oder wobei die ersten Stoßbereiche der ersten Zugelementanordnung gegenüber den zweiten Stoßbereichen der zweiten Zugelementanordnung in Längserstreckungsrichtung versetzt angeordnet sind, sodass die Stoßbereiche der einen Zugelementanordnung jeweils von einem Zugelement der anderen Zugelementanordnung überlappt und somit kräftemäßig überbrückt sind. Diese Ausführung betrifft beispielsweise einen endlosen Riemen oder einen langgestreckten Zugkörper, bei dem mehrere Zugelementanordnungen vorgesehen sind, wobei pro Zugelementanordnung mehrere Endabschnitte eines oder mehrerer Zugelemente vorgesehen sind.

Gegebenenfalls betrifft die Erfindung einen Zugkörper, wobei eine oder mehrere weitere Zugelementanordnungen vorgesehen sind, die jeweils folgende Komponenten umfassen: zwei oder mehr weitere Endabschnitte eines oder mehrerer langgestreckter weiterer Zugelemente, wobei die weiteren Endabschnitte entlang der Längserstreckungsrichtung im Wesentlichen fluchtend aneinandergereiht sind und wobei zwischen jeweils zwei weiteren Endabschnitten ein weiterer Stoßbereich vorgesehen ist, und wobei die weiteren Stoßbereiche der weiteren Zugelementanordnungen gegenüber den Stoßbereichen der ersten und der zweiten Zugelementanordnung in Längserstreckungsrichtung versetzt angeordnet sind, sodass die Stoßbereiche der weiteren Zugelementanordnungen von jeweils einem Zugelement der ersten Zugelementanordnung oder der zweiten Zugelementanordnung überlappt und somit kräftemäßig überbrückt sind. Gegebenenfalls ist vorgesehen, dass jeder Stoßbereich jeder Zugelementanordnung gegenüber allen weiteren Stoßbereichen der anderen Zugelementanordnungen in Längserstreckungsrichtung versetzt angeordnet ist, sodass jeder Stoßbereich von einem Zugelement jeder anderen Zugelementanordnung überlappt und kräftemäßig überbrückt ist. Gegebenenfalls ist vorgesehen, dass die Zugelementanordnungen bandförmig oder riemenförmig nebeneinander angeordnet sind, dass jede Zugelementanordnung mit der oder den benachbarten Zugelementanordnung(en) seitlich, also quer zur Längserstreckungsrichtung, verbunden ist, dass die seitliche Verbindung der Zugelementanordnungen eine stoffschlüssige Verbindung wie beispielsweise eine Klebeverbindung, eine Schweißverbindung und/oder eine formschlüssige Verbindung wie beispielsweise eine seitliche Verzahnung ist, dass zur Verbindung zweier Zugelementanordnungen ein Verbindungskörper vorgesehen ist, der als zwischen den Zugelementanordnungen angeordnete Klebeschicht, als zwischen den Zugelementanordnungen angeordnetes beidseitiges Klebeband, als zwischen den Zugelementanordnungen angeordnete Verschweißung, als zwischen den Zugelementanordnungen angeordneter Verbindungskörper und/oder als parallel zu den Zugelementanordnungen verlaufender und die Zugelementanordnungen überspannender Verbindungskörper ausgebildet ist, dass der Stoßbereich zwischen den einander zugewandten stirnseitigen Enden zweier im Wesentlichen fluchtend aneinandergereihter Zugelemente einer Zugelementanordnungen angeordnet ist, dass eine Zugelementanordnung, bevorzugt jede Zugelementanordnung, im Wesentlichen entlang der gesamten Länge ihrer Zugelemente, gegebenenfalls durchgehend oder abschnittsweise, mit der oder den weiteren Zugelementanordnung(en) seitlich verbunden ist und/oder dass die Zugelemente eine tragende Querschnittsfläche aufweisen, die über die Längserstreckung des Zugelements im Wesentlichen konstant ist. Auskragende Abschnitte wie Verzahnungen, die sich nicht konstant entlang der Längserstreckungsrichtung erstrecken, zählen definitionsgemäß nicht zum tragenden Querschnitt. Bei im Wesentlichen entlang der gesamten Länge ihrer Zugelemente verbundenen Zugelementanordnungen muss die Verbindung, beispielsweise die Verklebung, nicht durchgehend ausgeführt sein, sondern kann auch abschnittsweise, musterförmig oder unterbrochen ausgeführt sein. Auch bei abschnittsweise, musterförmig oder unterbrochen vorgesehenen Verbindungen sind jedoch die Zugelementanordnungen entlang der gesamten Länge ihrer Zugelemente miteinander verbundenen. Gegebenenfalls ist vorgesehen, dass die größte Dicke des Zugelements und/oder die größte Dicke der tragenden Querschnittsfläche kleiner ist, als ein Hundertstel der Länge des Zugelements. Gegebenenfalls ist vorgesehen, dass die Zugelemente einer Zugelementanordnung jeweils zumindest eine entlang der Längserstreckungsrichtung an den Außenseiten der Zugelemente verlaufende verlaufende Verbindungsfläche aufweisen, über die die Zugelementanordnung mit einer weiteren Zugelementanordnung verbunden oder verbindbar ist, dass die Seitenfläche im Wesentlichen ebenenförmig und/oder plan ausgebildet ist, dass die plane Verbindungsfläche einer Zugelementanordnung direkt mit der planen Verbindungsfläche einer weiteren Zugelementanordnung verklebt oder verschweißt ist und/oder dass die plane Verbindungsfläche einer Zugelementanordnung über einen Verbindungskörper mit der planen Verbindungsfläche einer weiteren Zugelementanordnung verklebt oder verschweißt ist. Gegebenenfalls ist zwischen den Verbindungsflächen zweier miteinander verbundener Zugelemente ein beidseitiges Klebeband vorgesehen. Dieses erstreckt sich beispielsweise entlang der gesamten Verbindungsfläche und entlang der Längserstreckungsrichtung, um eine Verbindung zwischen zwei Zugelementen herzustellen. Die Breite des Klebebands entspricht beispielsweise im Wesentlichen der Breite der Verbindungsfläche, um eine größtmögliche Klebefläche zu erhalten. Die Dicke des Klebebands, insbesondere die Dicke der Trägerfolie des Klebebands kann weniger als 1 mm oder mehrere Millimeter betragen. Gegebenenfalls ist jedoch statt dem Klebeband ein flüssig oder zähflüssig aufzutragender Klebstoff ohne Trägerfolie vorgesehen, der als Verbindungskörper zwei Verbindungsflächen zweier Zugelemente verbindet. Bei Zugelementen mit flachem bandförmigem Profil kann die Verbindung mit weiteren Zugelementen beispielsweise ausschließlich über deren Flachseiten, nicht über deren Schmalseiten erfolgen. In diesem Fall bleiben die Zugelemente an ihren Schmalseiten unverbunden. Gegebenenfalls ist vorgesehen, dass die Zugelemente aus einem Verbundwerkstoff gebildet sind, wobei der Verbundwerkstoff bevorzugt faserverstärkter Kunststoff und insbesondere extrudierter oder pultrudierter faserverstärkter Kunststoff ist. Gegebenenfalls ist vorgesehen, dass ein Zugelement der ersten Zugelementanordnung seitlich mit zwei Zugelementen einer benachbarten zweiten Zugelementanordnung verbunden ist, sodass der Stoßbereich der zweiten Zugelementanordnung durch das Zugelement der ersten Zugelementanordnung überlappt und kräftemäßig überbrückt ist, dass der Zugkörper als Keilriemen ausgebildet ist, wobei die entlang der Längserstreckungsrichtung verlaufenden keilförmigen Fortsätze des Keilriemens durch Zugelemente gebildet sind und/oder dass der Zugkörper als Zahnriemen ausgebildet ist, wobei die quer Längserstreckungsrichtung verlaufenden zahnförmigen Fortsätze des Zahnriemen durch Zugelemente gebildet sind. Gegebenenfalls ist vorgesehen, dass zwei oder mehrere Zugelementanordnungen über eine weitere Zugelementanordnung miteinander verbunden sind. Gegebenenfalls ist vorgesehen, dass mehrere Zugelementanordnungen, insbesondere mit jeweils rechteckigem, trapezförmigem, dreieckigem oder parallelogrammförmigem Profil, seitlich nebeneinander entlang einer Normalen zur Längserstreckungsrichtung aneinandergereiht und bevorzugt miteinander verbunden sind und dadurch zusammen einen bandförmigen Körper bilden, dass eine weitere Zugelementanordnung vorgesehen ist, die ein flaches, bandförmiges Profil aufweist und die entlang der Normalen zur Längserstreckungsrichtung eine größere Breite aufweist, als die Zugelementanordnungen mit rechteckigem Profil und dass sich die weitere Zugelementanordnung mit flachem, bandförmigem Profil entlang der Normalen zur Längserstreckungsrichtung parallel verlaufend über mehrere Zugelementanordnungen mit rechteckigem Profil erstreckt und mit mehrere Zugelementanordnungen mit rechteckigem Profil verbunden ist. Gegebenenfalls ist vorgesehen, dass zwei oder mehrere Zugelementanordnungen seitlich nebeneinander entlang einer Normalen zur Längserstreckungsrichtung aneinandergereiht und miteinander verbunden sind und dadurch zusammen einen bandförmigen Körper bilden und dass die zumindest zwei miteinander verbundenen Zugelementanordnungen ein flaches, bandförmiges Profil aufweisen. Gegebenenfalls ist vorgesehen, dass zwischen zwei ersten Zugelementanordnungen eine Verbindungsfläche vorgesehen ist und dass eine zweite Zugelementanordnung vorgesehen ist, die derart mit den zwei ersten Zugelementanordnungen verbunden ist, dass die Verbindungsfläche seitlich, quer zur Längserstreckungsrichtung, überlappt und kräftemäßig überbrückt ist. Gegebenenfalls ist vorgesehen, dass sich die zweite Zugelementanordnung entlang der Verbindungsfläche der zwei ersten Zugelementanordnungen erstreckt und mit beiden ersten Zugelementanordnungen verbunden ist, sodass die Verbindungsfläche von dem zweiten Zugelement abgedeckt ist. Gegebenenfalls ist vorgesehen, dass Zugelemente und/oder Zugelementanordnungen mit einem flachen, bandförmigen Profil vorgesehen sind, die jeweils zwei Schmalseiten und zwei Flachseiten aufweisen,
dass zwei erste Zugelementanordnungen mit flachem, bandförmigem Profil seitlich nebeneinander angeordnet sind, sodass zwei Schmalseiten einander zugewandt nebeneinander liegen oder miteinander verbunden sind, dass zumindest eine zweite Zugelementanordnung mit flachem, bandförmigem Profil vorgesehen ist, deren Flachseite mit jeweils einer Flachseite der beiden ersten Zugelementanordnungen mit flachem, bandförmigem Profil verbunden ist, sodass der Bereich der einander zugewandten Schmalseiten der ersten Zugelementanordnungen mit flachem, bandförmigem Profil überlappt, seitlich kräftemäßig überbrückt, abgedeckt und/oder entlang der Längserstreckungsrichtung abgedeckt ist. Gegebenenfalls ist vorgesehen, dass ein Stoßbereich zumindest teilweise schräg angeordnet ist, wobei die Quererstreckungsrichtung des Stoßbereichs zumindest teilweise von einer Normalen Richtung zur Längserstreckungsrichtung abweicht. Gegebenenfalls ist vorgesehen, dass die Zugelemente jeweils aus einem Verbundwerkstoff, aus Faserverbundmatten und/oder aus faserverstärktem Material wie insbesondere faserverstärkter Kunststoff, glasfaserverstärkter Kunststoff, faserverstärkte Harze, faserverstärkte Polymere, faserverstärkte Duroplaste, faserverstärkte Thermoplaste und/oder faserverstärkte Elastomere gebildet sind, wobei die Fasern beispielsweise anorganische Verstärkungsfasern, metallische Verstärkungsfasern, organische Verstärkungsfasern, mineralisch Fasern und/oder Naturfasern sind.

Der erfindungsgemäße Zugkörper hat beispielsweise eine Zugfestigkeit von 700 N/mm². bis 1000 N/mm². Als beispielsweise Anwendung hat der Zugkörper einen Querschnitt von 3000mm² und damit eine maximale Zugkraft von etwa 2100kN bis 3300kN. Je nach verwendetem Material und Querschnitt können die Werte der Zugfestigkeit und der maximalen Zugkraft variieren.

Der erfindungsgemäße Zugkörper umfasst zumindest zwei Zugelementanordnungen, die seitlich, quer zur Längserstreckungsrichtung, miteinander verbunden sind. Gegebenenfalls sind zwei Zugelementanordnungen über einen Verbindungskörper miteinander verbunden. Jede Zugelementanordnung umfasst zumindest zwei Zugelementenden oder zwei Zugelement-Endabschnitte, die fluchtend entlang der Längserstreckungsrichtung aneinander gereiht sind. Im Falle eines bandförmigen Körpers kann jede Zugelementanordnung beispielsweise zwei Zugelemente umfassen, die entlang der Längserstreckungsrichtung aneinander gereiht sind. Die beiden Enden zweier Zugelemente einer Zugelementanordnung, die zueinander weisen, sind im Wesentlichen fluchtend aneinander gereiht, sodass zwischen diesen beiden Enden ein Stoßbereich gebildet ist. In dem Stoßbereich, also zwischen den beiden Enden der beiden Zugelemente ist kein Zugelement angeordnet. Auch die weitere Zugelementanordnung umfasst zwei Zugelemente mit einem dazwischen angeordneten Stoßbereich. Erfindungsgemäß ist der Stoßbereich der einen Zugelementanordnung zum Stoßbereich der zweiten Zugelementanordnung in Längserstreckungsrichtung versetzt angeordnet, sodass die jeweiligen Stoßbereiche von einem Zugelement der jeweiligen anderen Zugelementanordnung überlappt und kräftemäßig überbrückt sind.

Bei Endlosriemenförmiger Ausgestaltung des Zugkörpers können die beiden Endabschnitte einer Zugelementanordnung, die fluchtend aneinander gereiht sind, auch zwei Enden eines einzigen Zugelements sein. Gegebenenfalls umfasst ein als Zugriemen ausgebildeter Zugkörper jedoch auch pro Zugelementanordnung mehrere Zugelemente.

Als überlappt und kräftemäßig überbrückt im Sinne der Erfindung wird folgende Anordnung verstanden: zwei Endabschnitte eines oder mehrerer Zugelemente sind im Wesentlichen fluchtend aneinander gereiht, wobei zwischen den beiden Endabschnitten ein Stoßbereich vorgesehen ist. Somit sind die beiden Endabschnitte, isoliert betrachtet, nicht oder nur schwach miteinander verbunden. Als schwach miteinander verbunden ist ein Verbund bezeichnet, dessen Festigkeit unterhalb der Zugfestigkeit der einzelnen Zugelemente liegt oder dessen Zugfestigkeit im Vergleich zur Zugfestigkeit des Zugelements vernachlässigbar klein ist. Um die beiden Endabschnitte des oder der Zugelemente fest und insbesondere zugfest miteinander zu verbinden, ist ein weiteres Zugelement vorgesehen, das Teil der weiteren, seitlich angrenzenden Zugelementanordnung ist. Dieses Zugelement überlappt den Stoßbereich und ist seitlich mit beiden Endbereichen verbunden. Die Kraft, insbesondere die Zugkraft verläuft somit von dem einen Endabschnitt über das parallel verlaufende, den Stoßabschnitt überlappende Zugelement und von diesem wieder in den anderen Endabschnitt. Die Kräfte werden dabei über die seitliche Verbindung der Zugelemente übertragen. Dadurch ist der Stoßbereich von einem Zugelement der anderen Zugelementanordnung überlappt und kräftemäßig überbrückt.

Gemäß einer vorteilhaften Ausgestaltung der Erfindung ist jeder einzelne Stoßbereich von zumindest einem Zugelement einer weiteren Zugelementanordnung überlappt. Besonders bevorzugt ist jeder Stoßbereich von allen anderen Zugelementen der in diesem Bereich angeordneten weiteren Zugelementanordnungen überlappt. Somit liegen quer zur Längserstreckungsrichtung gemäß dieser bevorzugten Ausführungsform nie zwei Stoßbereiche nebeneinander. Jeder Querschnitt des Zugkörpers ist dadurch maximal durch einen Stoßbereich einer einzelnen Zugelementanordnung geschwächt. Durch diese Anordnung kann eine optimale Zugfestigkeit des gesamten Zugkörpers erzielt werden. Insbesondere kann durch diese Konfiguration der Zugkörper beliebig lang ausgestaltet sein, da die Zugelemente einer Zugelementanordnung in beliebiger Anzahl in Längserstreckungsrichtung aneinander gereiht werden können. Die Stoßbereiche der Zugelemente einer Zugelementanordnung werden dabei erfindungsgemäß durch Zugelemente weiterer Zugelementanordnungen überlappt und kräftemäßig überbrückt. Durch diese Konfiguration kann der Zugkörper darüber hinaus auch eine beliebige Querschnittsform aufweisen, da die Zugelemente in beliebiger Form und Reihenfolge seitlich miteinander verbunden werden können. Auch komplexe Formen oder große Querschnittsabmessungen, die beispielsweise durch einen Extruder nicht hergestellt werden könnten, sind durch die Erfindungsgemäße Konfiguration ermöglicht.

Bevorzugt weisen die Zugelemente seitliche Flächen auf, über die sie erleichtert mit weiteren Zugelementen verbunden werden können. Diese Flächen können insbesondere gerade oder ebenenförmig ausgebildet sein, um mit weiteren geraden oder ebenenförmigen Flächen verbunden zu werden. Gegebenenfalls sind die Flächen verzahnt ausgeführt, sodass die Berührfläche zwischen zwei Zugelementen vergrößert ist oder ein Formschluss gegeben ist.

Die Zugelementanordnungen umfassen ein oder mehrere Zugelement(e), deren Endabschnitte im Wesentlichen fluchtend aneinander gereiht sind. Gegebenenfalls bedeutet dies, dass die Endabschnitte zueinander weisend angeordnet sind. Bei geradlinig verlaufenden Zugelementen bedeutet dies, dass diese entlang der Längserstreckungsrichtung geradlinig aneinander gereiht sind. Im Bereich von Umlenkungen durch Umlenkrollen beispielsweise, kann auch eine gebogene oder gekrümmte Aneinanderreihung als im Wesentlichen fluchtend aneinander gereiht bezeichnet werden. Gegebenenfalls weisen alle Zugelemente einer Zugelementanordnung im Wesentlichen denselben Profilquerschnitt bzw. zumindest denselben tragenden Querschnitt auf. Ausbuchtungen, die quer zur Längserstreckungsrichtung und quer zur Belastungsrichtung verlaufen, gehören definitionsgemäß nicht zum tragenden Querschnitt. Der tragende Querschnitt ist insbesondere jener Querschnitt eines Profils, der sich im Wesentlichen unverändert durch das gesamte Zugelement erstreckt. Gegebenenfalls können jedoch die Zugelemente einer Zugelementanordnung auch unterschiedliche oder sich über die Längserstreckungsrichtung ändernde Profilquerschnitte aufweisen. Gegebenenfalls können unterschiedliche Zugelementanordnungen jeweils unterschiedliche Querschnittsprofile aufweisen. So können beispielsweise die Zugelemente einer ersten Zugelementanordnung einen ersten Profilquerschnitt und die Zugelemente einer zweiten Zugelementanordnung einen zweiten, von dem ersten unterschiedlichen Profilquerschnitt aufweisen. Beispielsweise können mehrere nebeneinander angeordnete Zugelementanordnungen einen im Wesentlichen rechteckigen bis quadratischen Querschnitt aufweisen, wobei eine weitere Zugelementanordnung einen bandförmigen, flachen Profilquerschnitt aufweist, der mit mehreren Zugelementanordnungen verbunden ist und mehrere Zugelementanordnungen übergreift.

Gegebenenfalls kann der Zugkörper als Keilriemen ausgeführt sein. Der Keilriemen weist einen oder mehrere der Längserstreckungsrichtung folgende Fortsätze auf, die bevorzugt Keilflächen umfassen. Über diese keilförmigen Fortsätze kann die Reibung zwischen beispielsweise einem antreibenden Rad und dem Zugkörper erhöht werden, wodurch höhere Kräfte und/oder Drehmomente übertragbar sind. Die keilförmigen Fortsätze verbessern somit eine reibschlüssige Verbindung mit einer Antriebsscheibe. Gegebenenfalls kann der Zugkörper als Zahnriemen ausgeführt sein, der zahnförmige Fortsätze umfasst, die im Wesentlichen quer zur Längserstreckungsrichtung verlaufen und in Längserstreckungsrichtung voneinander abgesetzt sind. Diese Zahnriemen erlauben eine formschlüssige Übertragung des Drehmoments eines Zahnrades auf den Zugkörper.

Gegebenenfalls umfassen die Zugelementanordnungen bzw. deren Zugelemente seitlich auskragende Fortsätze, die zur verzahnten Verbindung mit den benachbarten Zugelementanordnungen dienen. Alle Fortsätze, insbesondere die keilförmigen Fortsätze, die zahnförmigen Fortsätze und die Fortsätze zur Verbindung mit weiteren Zugelementanordnungen, sind bevorzugt aus den Zugelementen selbst gebildet und/oder ein Teil eines oder mehrerer Zugelemente. Dies ermöglicht eine Übertragung hoher Kräfte. Gegebenenfalls sind die Stoßbereiche bei allen Ausführungsformen über die gesamte Längserstreckung des Zugkörpers verteil, bevorzugt regelmäßig verteilt, sodass der Zugkörper entlang seiner gesamten Längserstreckung im Wesentlichen dieselben oder gleichbleibende Biegeeigenschaften aufweist und insbesondere keinen Spleißbereich mit erhöhter Biegesteifigkeit aufweist. Bevorzugt betrifft dies alle Stoßbereiche aller Zugelementanordnungen.

Gegebenenfalls ist vorgesehen, dass mehrere, zumindest zwei, Zugelementanordnungen mit jeweils flachem, bandförmigem Profil vorgesehen sind, die jeweils zwei Schmalseiten und zwei Flachseiten aufweisen, und/oder dass zwei Zugelementanordnungen mit flachem, bandförmigem Profil seitlich, also quer zur Längserstreckungsrichtung, nebeneinander angeordnet sind, sodass jeweils zwei Flachseiten einander zugewandt und miteinander verbunden sind. Gegebenenfalls ist vorgesehen, dass der Querschnitt der Zugelementanordnungen mit flachem, bandförmigem Profil jeweils im Wesentlichen rechteckförmig und langgestreckt ist. Gegebenenfalls ist vorgesehen, dass die Flachseiten der Zugelementanordnungen im Wesentlichen seitlich deckungsgleich übereinander angeordnet sind. Gegebenenfalls ist vorgesehen, dass die normal zur Längserstreckung gemessene Breite der Flachseiten der Breite des gesamten Zugkörpers entspricht. Gegebenenfalls ist vorgesehen, dass der Zugkörper als bandförmiger Zugriemen ausgebildet ist, der quer zu seiner Längserstreckungsrichtung um seine Flachseite um eine Umlenkrolle umlenkbar oder umgelenkt ist. Bei breiten Riemen, beispielsweise bei Riemenbreiten von einem Meter oder mehr, können mehrere Zugelementanordnungen mit flachem, bandförmigem Profil seitlich entlang ihrer Schmalseiten nebeneinander angeordnet werden, die über weitere Zugelementanordnungen mit flachem, bandförmigem Profil an ihren Flachseiten miteinander verbunden werden.

In allen Ausführungsformen können gegebenenfalls zwischen einigen Zugelementen elastische Zwischenkörper vorgesehen. Diese können beispielsweise elastische Körper wie Gummikörper oder Silikonkörper sein, die mit den Zugelementen form-, kraft- oder reibschlüssig verbunden sind. Bei derartigen elastischen, weniger zugfesten Zwischenkörpern sind bevorzugt zusätzlich zugfeste Verbindungskörper vorgesehen, über die die zugfeste Verbindung der Zugelemente erfolgt. Zugfeste bzw. scherkraftresistente Verbindungskörper sind beispielsweise Klebeflächen, Klebeschichten, beidseitige Klebebänder oder Klebekörper, über die die Zugelemente miteinander verbunden sind. Ein beidseitiges Klebeband umfasst beispielsweise eine bandförmige Trägerfolie, die an beiden Flachseiten mit einer Klebeschicht versehen ist. Ferner können zugfeste Verbindungskörper auch Schweißnähte sein, über die die Zugelemente miteinander verschweißt sind. Gegebenenfalls sind die Verbindungskörper ebenfalls als Zugelemente ausgebildet. Gegebenenfalls weisen die Verbindungskörper eine seitliche Verzahnung auf, die in eine seitliche Verzahnung der Zugelemente eingreift, um eine formschlüssige Verbindung zu bewirken.
In weiterer Folge wird die Erfindung anhand konkreter Ausführungsbeispiele und anhand der Figuren weiter beschrieben.
Fig. 1 zeigt eine schematische Schrägansicht eines erfindungsgemäßen Zugkörpers, der als endloser Riemen ausgebildet ist.
Fig. 2 zeigt eine schematische Darstellung eines Abschnittes eines erfindungsgemäßen Zugkörpers.
Fig. 3 zeigt eine schematische Darstellung eines Abschnitts eines erfindungsgemäßen Zugkörpers.
Fig. 4 zeigt einen Abschnitt einer weiteren Ausführungsform eines erfindungsgemäßen Zugkörpers.
Fig. 5 zeigt eine Schnittdarstellung einer Ausführungsform eines erfindungsgemäßen Zugkörpers.
Fig. 6 zeigt eine Schnittdarstellung einer Ausführungsform des erfindungsgemäßen Zugkörpers.
Fig. 7 zeigt einen Abschnitt eines als Keilriemen ausgebildeten Zugkörpers.
Fig. 8 zeigt einen Abschnitt eines als Zahnriemen ausgeführten Zugkörpers.
Fig. 9 zeigt eine weitere Ausführungsform eines als Keilriemen ausgeführten Zugkörpers.
Fig. 10a und 10b zeigen zwei Ausführungsformen erfindungsgemäßer Zugkörper mit im Wesentlichen rundem Querschnitt.
Die Figuren 11a bis d zeigen weitere mögliche Ausgestaltungen der Erfindung.
Die Figuren 12a und 12b zeigen weitere mögliche Ausgestaltungen der Erfindung.
Die Figuren 13 und 14 zeigen weitere Ausführungsformen der Erfindung.

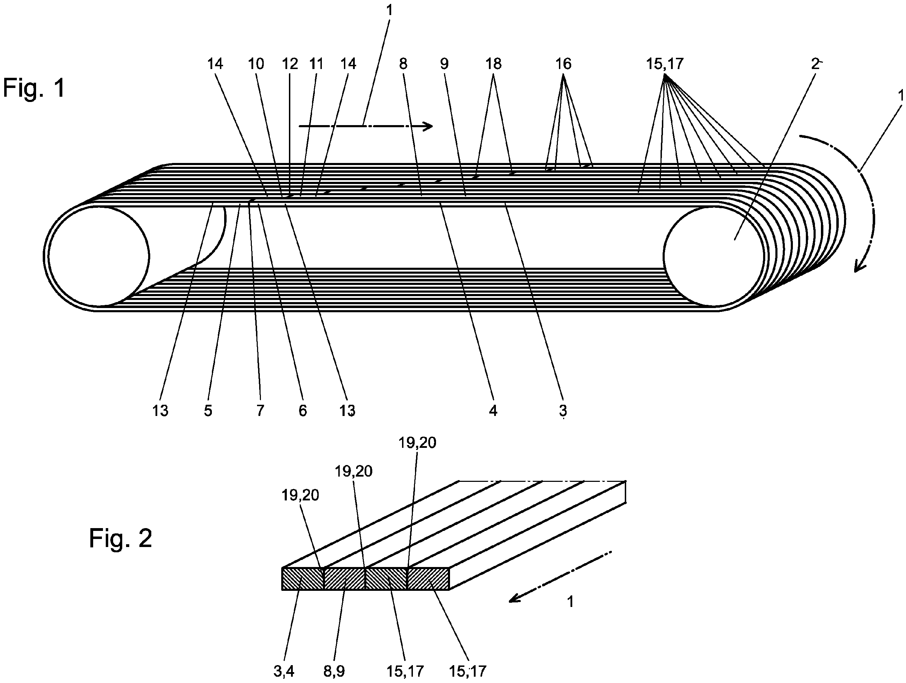

Fig. 1 zeigt einen erfindungsgemäßen Zugkörper, der als endloser Riemen ausgebildet ist. Er weist eine gewisse Breite auf, sodass der Riemen beispielsweise als Bandförderer eingesetzt werden kann. Ein weiterer Vorteil der Ausgestaltung als breiter Zugkörper ist, dass durch die breite Ausgestaltung die Gesamtquerschnittsfläche und damit die Zugfestigkeit erhöht werden. Jedoch geschieht diese Vergrößerung in der Ausführungsform der Fig.1 nur in eine Richtung, womit die Höhe des Zugkörpers gering gehalten ist, sodass der Zugkörper um eine Umlenkrolle umlenkbar ist. Der Zugkörper umfasst eine erste Zugelementanordnung 3, die aus einem einzigen ersten Zugelement 4 besteht. Das erste Zugelement 4 umfasst ein erstes Ende des langgestreckten Zugelements 5, sowie ein zweites Ende des langgestreckten Zugelements 6. Zwischen diesen beiden Enden des Zugelements 4 ist ein erster Stoßbereich 7 angeordnet. Die Enden 5, 6 entsprechen den einander zugewandten Stirnflächen der ersten Endabschnitte 13. Ferner ist eine zweite Zugelementanordnung 8 vorgesehen, die ein einzelnes zweites Zugelement 9 umfasst. Die Enden 10, 11 des zweiten Zugelements 9 bzw. der zweiten Endabschnitte 14 sind derart zusammengeführt, dass zwischen den Enden ein zweiter Stoßbereich 12 angeordnet ist. Ferner sind weitere Zugelementanordnungen 15 umfassend weitere Zugelemente 17 vorgesehen, deren Endabschnitte 16 zusammengeführt sind, sodass zwischen den Enden oder den Endabschnitten weitere Stoßbereiche 18 vorgesehen sind. Die Endabschnitte einer Zugelementanordnung sind im Wesentlichen entlang der Längserstreckungsrichtung 1 fluchtend aneinander gereiht. Im Bereich des geradlinigen Verlaufs bedeutet dies, dass auch die Endabschnitte im Wesentlichen geradlinig aneinander gereiht sind. Im Bereich der Umlenkrolle 2 sind die Endabschnitte ebenfalls fluchtend aneinander gereiht, wobei die Längserstreckungsrichtung im Wesentlichen der Umlenkkrümmung des Zugkörpers entspricht.

Fig. 2 zeigt einen Abschnitt eines erfindungsgemäßen Zugkörpers in einer schematischen Schrägansicht. Es handelt sich um einen Teilabschnitt eines möglichen Zugkörpers umfassend vier Zugelementanordnungen, insbesondere eine erste Zugelementanordnung 3 mit einem ersten Zugelement 4, eine zweite Zugelementanordnung 8 mit einem zweiten Zugelement 9, sowie weitere Zugelementanordnungen 15 mit weiteren Zugelementen 17. Die Zugelemente sind seitlich, also quer zur Längserstreckungsrichtung 1 miteinander verbunden. In der dargestellten Ausführungsform sind die Zugelemente oder die Zugelementanordnungen seitlich nebeneinander bandförmig angeordnet. Die Zugelementanordnungen und bzw. deren Zugelemente umfassen jeweils zumindest eine Verbindungsfläche 20. In der vorliegenden Ausführungsform ist diese Verbindungsfläche ebenenförmig ausgebildet, sodass zwei nebeneinander liegende Zugelemente flächig miteinander verbunden werden können. Gegebenenfalls sind in allen Ausführungsformen die Verbindungsflächen derart ausgestaltet, dass eine flächige Verbindung mit dem benachbarten Zugelement ermöglicht ist. So können die Zugelemente im Bereich der Verbindungsflächen 20 im Wesentlichen einander vervollständigend ausgebildet sein, sodass diese ähnlich einer Steckverbindung oder einer flächigen Klebeverbindung entsprechende Berührungsflächen aufweisen. Zur Verbindung zweier Zugelementanordnungen sind bevorzugt Verbindungskörper 19 wie Klebeflächen oder Klebebänder vorgesehen.

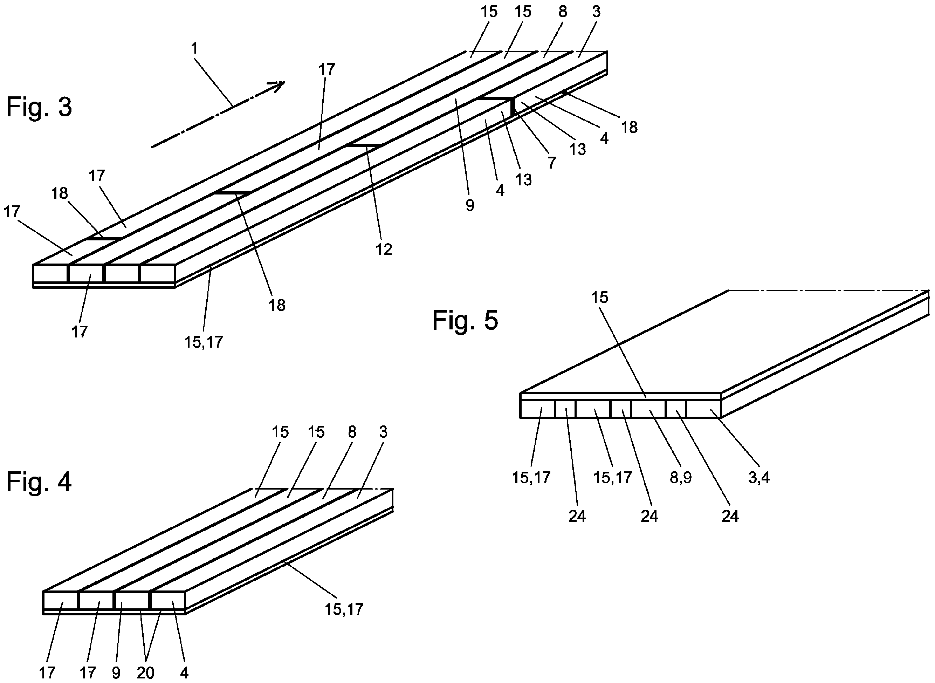

Fig. 3 zeigt eine weitere Ausführungsform eines erfindungsgemäßen Zugkörpers mit einer ersten Zugelementanordnung 3, einer zweiten Zugelementanordnung 8, sowie zwei weiteren Zugelementanordnungen 15. Die erste Zugelementanordnung 3 umfasst zwei erste Zugelemente 4. Diese ersten Zugelemente 4 weisen jeweils einen ersten Endabschnitt 13 auf. Die ersten Endabschnitte 13 sind zueinander weisend im Wesentlichen fluchtend aneinander gereiht. Zwischen den beiden Endabschnitten ist ein erster Stoßbereich 7 vorgesehen. Im Stoßbereich 7 ist kein Zugelement vorgesehen. Insbesondere kann ein Spalt zwischen den beiden ersten Endabschnitten 13 gebildet sein. Gegebenenfalls ist eine Klebefläche im Stoßbereich vorgesehen. Jedoch ist der Stoßbereich an sich nicht dafür eingerichtet, die Zugkraft zur Gänze zu übertragen. Vielmehr ist der Stoßbereich durch ein Zugelement der zweiten Zugelementanordnung überlappt und kräftemäßig überbrückt. Das mit dem Bezugszeichen 9 bezeichnete zweite Zugelement der zweiten Zugelementanordnung 8 überlappt den ersten Stoßbereich 7. Das zweite Zugelement 9 ist mit beiden ersten Zugelementen 4 seitlich, also quer zur Längserstreckungsrichtung 1 verbunden. Dadurch ist der Stoßbereich 7 kräftemäßig überbrückt. Auch die zweite Zugelementanordnung umfasst einen zweiten Stoßbereich 12. Dieser zweite Stoßbereich 12 ist von einem ersten Zugelement 4 überlappt und somit kräftemäßig überbrückt. Auch die weiteren Zugelementanordnungen 15 umfassen weitere Stoßbereiche 18. Diese Stoßbereiche werden ebenfalls jeweils von zumindest einem weiteren Zugelement überlappt und kräftemäßig überbrückt. Insbesondere sind in dieser Ausführungsform alle Stoßbereiche in Längserstreckungsrichtung 1 gegenüber einander versetzt angeordnet, sodass jeder Stoßbereich von einem Zugelement jeder weiteren Zugelementanordnung überlappt und kräftemäßig überbrückt ist.

Die Ausführungsform gemäß Fig. 3 umfasst ein flaches, bandförmiges Zugelement einer Zugelementanordnung. Auch der Stoßbereich 18 dieser bandförmigen, flachen Zugelementanordnung ist derart angeordnet, sodass er durch alle weiteren Zugelemente der weiteren Zugelementanordnungen überbrückt ist.

Fig. 4 zeigt eine detailliertere Darstellung eines Abschnitts eines Zugkörpers gemäß Fig. 3. Der Zugkörper umfasst ein erstes Zugelement 4, ein zweites Zugelement 9 und weitere Zugelemente 17. Vier der Zugelemente haben einen rechteckigen bis quadratischen Querschnitt. Ferner ist ein Zugelement angeordnet, das einen bandförmigen Querschnitt aufweist und insbesondere flach ausgebildet ist. Dieses Zugelement ist mit vier Zugelementen verbunden. Die erste Zugelementanordnung 3 ist mit der bandförmigen Zugelementanordnung und der zweiten Zugelementanordnung verbunden. Die zweite Zugelementanordnung 8 ist mit der ersten Zugelementanordnung 3, mit der bandförmigen Zugelementanordnung und mit einer weiteren Zugelementanordnung 15 verbunden. Die Zugelemente weisen Verbindungsflächen 20 auf. Über diese Verbindungsflächen sind die Zugelemente seitlich, quer zur Längserstreckungsrichtung miteinander verbunden.

Fig. 5 zeigt eine weitere Ausführungsform eines erfindungsgemäßen Zugkörpers in einer Schnittdarstellung. Dieser umfasst eine erste Zugelementanordnung 3 mit einem ersten Zugelement 4, eine zweite Zugelementanordnung 8 mit einem zweiten Zugelement 9, sowie zwei weitere Zugelementanordnungen 15 mit jeweils einem oder mehreren weiteren Zugelementen 17. Ferner ist eine bandförmige Zugelementanordnung 15 vorgesehen, die mit allen weiteren Zugelementanordnungen verbunden ist. Die Zugelementanordnungen, die keinen bandförmigen Querschnitt aufweisen, sind seitlich miteinander verbunden. Weiters sind zwischen einigen Zugelementanordnungen Zwischenkörper 24 vorgesehen. Der Zwischenkörper 24 kann beispielsweise andere Materialeigenschaften aufweisen, als die Zugelemente. So kann der Zwischenkörper 24 elastisch bzw. verformbar sein, sodass eine Flexibilität des Bandes gegeben ist. Ferner kann der Zwischenkörper 24 eine größere Steifigkeit aufweisen, als die Zugelemente, sodass der Zugkörper durch den Verbindungskörper ausgesteift ist. Bevorzugt weist auch der Zwischenkörper 24 eine Zugfestigkeit auf, die im Bereich der Zugfestigkeit der Zugelemente liegt. Gegebenenfalls kann der Zwischenkörper 24 jedoch auch eine geringere Zugfestigkeit aufweisen, sodass die Zugkräfte vorrangig durch die Zugelemente und nicht durch die Zwischenkörper 24 getragen werden.

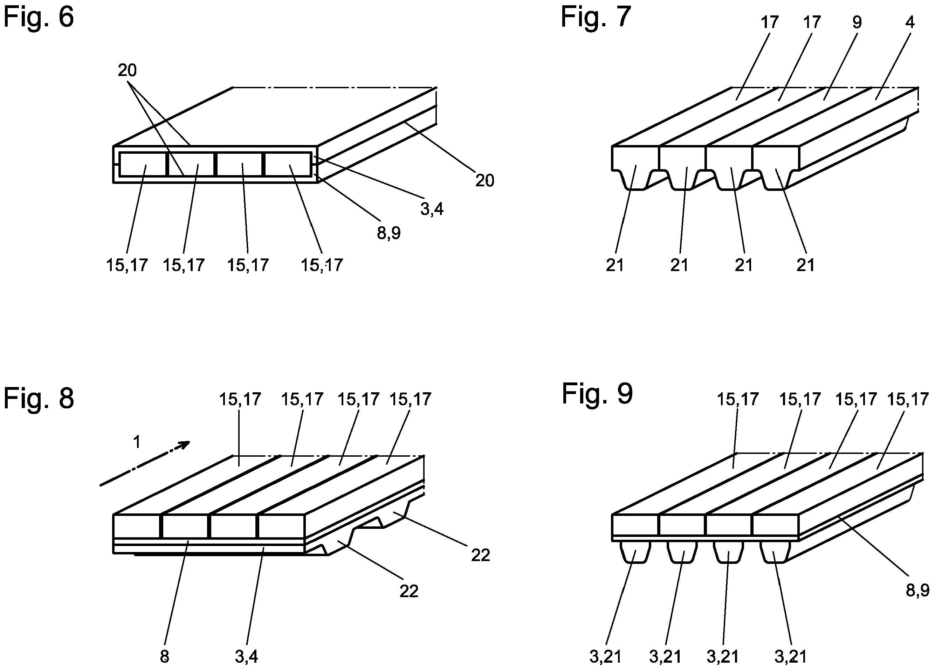

Fig. 6 zeigt eine weitere Ausführungsform eines erfindungsgemäßen Zugkörpers in einer Schnittdarstellung. Die erste Zugelementanordnung 3 bzw. deren erstes Zugelement 4 ist bandförmig ausgebildet, wobei die Ränder des Bandes U-förmig umgebogen sind, sodass die weiteren Zugelementanordnungen 15 bzw. deren Zugelemente 17 seitlich umgriffen sind. Auch die zweite Zugelementanordnung 8 bzw. deren zweite Zugelemente sind bandförmig ausgestaltet, wobei die seitlichen Enden derart umgebogen sind, sodass die weiteren Zugelemente 17 umgriffen sind. Die umgebogenen Ränder der bandförmig ausgebildeten ersten Zugelementanordnung 3 und der zweiten Zugelementanordnung 8 sind zueinander geführt und gegebenenfalls an den Verbindungsflächen 20 miteinander verbunden. Dadurch sind die weiteren Zugelementanordnungen 15 in einem zwischen der ersten Zugelementanordnung 3 und der zweiten Zugelementanordnung 8 angeordneten Raum eingeschlossen. Die weiteren Zugelementanordnungen 15 können seitlich miteinander verbunden sein. Jedoch sind gemäß der vorliegenden Ausführungsform die weiteren Zugelementanordnungen 15 nicht miteinander verbunden, sondern nur jeweils mit der ersten Zugelementanordnung 3 und der zweiten Zugelementanordnung 8.

Fig. 7 zeigt eine weitere Ausgestaltung eines erfindungsgemäßen Zugkörpers, wobei lediglich schematisch ein Abschnitt des Zugkörpers dargestellt ist. Der Zugkörper ist als Keilriemen ausgeführt. Er umfasst ein erstes Zugelement 4, ein zweites Zugelement 9, sowie weitere Zugelemente 17. Der Zugkörper gemäß Fig. 7 weist keilförmige Fortsätze 21 auf. Diese keilförmigen Fortsätze dienen beispielsweise dem Eingriff in eine Antriebsscheibe, wobei durch die keilförmigen Fortsätze die Fläche und somit die übertragbare Reibkraft erhöht ist. Die keilförmigen Fortsätze 21 sind aus den Zugelementen 4, 8, 17 gebildet. Dadurch ist bewirkt, dass eine hohe Reibkraft auf den Zugkörper übertragen werden kann. Die keilförmigen Fortsätze 21 sind in der dargestellten Ausführungsform profilförmig durchgehend ausgebildet. Jedoch können die keilförmigen Fortsätze in Längserstreckungsrichtung auch voneinander abgesetzt sein, sodass eine Zugelementanordnung mehrere keilförmige Fortsätze 21 umfasst, wobei zwischen den einzelnen keilförmigen Fortsätzen 21 einer einzigen Zugelementanordnung ein Abstand vorgesehen sein kann. Durch diese nicht durchgehende Ausführung der keilförmigen Fortsätze ist das Flächenträgheitsmoment des Zugkörpers herabgesetzt, wodurch die Biegbarkeit um beispielsweise eine Umlenkrolle verbessert ist.

Fig. 8 zeigt eine weitere Ausführungsform eines erfindungsgemäßen Zugkörpers, wobei lediglich ein Abschnitt in einer schematischen Schrägansicht dargestellt ist. Der Zugkörper umfasst eine erste Zugelementanordnung 3 mit einem ersten Zugelement 4, sowie weitere Zugelementanordnungen 15 mit weiteren Zugelementen 17. Ferner ist zur Verbindung der weiteren Zugelementanordnungen 15 mit der ersten Zugelementanordnung 3 eine zweite Zugelementanordnung 8 vorgesehen. Die erste Zugelementanordnung 3 bzw. deren Zugelement oder Zugelemente 4 weist zahnförmige Fortsätze 22 auf. Die zahnförmigen Fortsätze 22 verlaufen im Wesentlichen quer zur Längserstreckungsrichtung 1 und sind in Längserstreckungsrichtung voneinander abgesetzt. Dadurch ist der Zugkörper als Zahnriemen ausgebildet. Die zahnförmigen Fortsätze 22 können beispielsweise in zahnradförmig ausgebildete Antriebsräder eingreifen, um einen formschlüssigen Antrieb zu ermöglichen. Die weiteren Zugelementanordnungen 15 können seitlich miteinander verbunden sein. Ferner sind die weiteren Zugelementanordnungen mit der zweiten Zugelementanordnung 8 verbunden. Die zweite Zugelementanordnung 8 ist bandförmig ausgebildet und mit mehreren nebeneinander angeordneten weiteren Zugelementanordnungen 15 verbunden. Die zweite Zugelementanordnung 8, die bandförmig ausgebildet ist, ist flächig, insbesondere großflächig, mit der ersten Zugelementanordnung 3 verbunden, die zahnförmige Fortsätze 22 umfasst oder trägt.

Fig. 9 zeigt eine weitere Ausführungsform eines erfindungsgemäßen Zugkörpers, wobei lediglich ein Abschnitt in einer schematischen Schrägdarstellung dargestellt ist. Der Zugkörper der Fig. 9 umfasst mehrere erste Zugelementanordnungen 3, eine zweite Zugelementanordnung 4, sowie mehrere weitere Zugelementanordnungen 15. Die Zugelemente sind derart ausgebildet, sodass ein Keilriemen gebildet ist. Dieser umfasst keilförmige Fortsätze 21, die insbesondere aus den ersten Zugelementanordnungen 3 gebildet sind und in Längserstreckungsrichtung verlaufen. Die keilförmigen Fortsätze 21 bzw. die ersten Zugelemente 4 der ersten Zugelementanordnungen 3 sind beabstandet zueinander angeordnet und insbesondere nicht direkt miteinander verbunden. Die ersten Zugelemente 4 der ersten Zugelementanordnungen 3 sind über eine zweite Zugelementanordnung 8 bzw. ein zweites Zugelement 9 miteinander verbunden. So ist jedes erste Zugelement mit der zweiten Zugelementanordnung 8 verbunden. Die zweite Zugelementanordnung 8 ist im Wesentlichen bandförmig ausgebildet und weist eine Breite auf, sodass ein Keilriemen gebildet ist. Auf der anderen Seite der zweiten Zugelementanordnung 8, also auf jener Seite, an der die ersten Zugelemente nicht angeordnet sind, sind weitere Zugelementanordnungen 15 angeordnet und mit der zweiten Zugelementanordnung 8 verbunden. Die weiteren Zugelementanordnungen bzw. deren Zugelemente 17 haben einen im Wesentlichen rechteckigen bis quadratischen Querschnitt. Die weiteren Zugelemente sind zumindest mit der zweiten Zugelementanordnung 8 verbunden. Gegebenenfalls sind die weiteren Zugelemente auch seitlich miteinander verbunden.

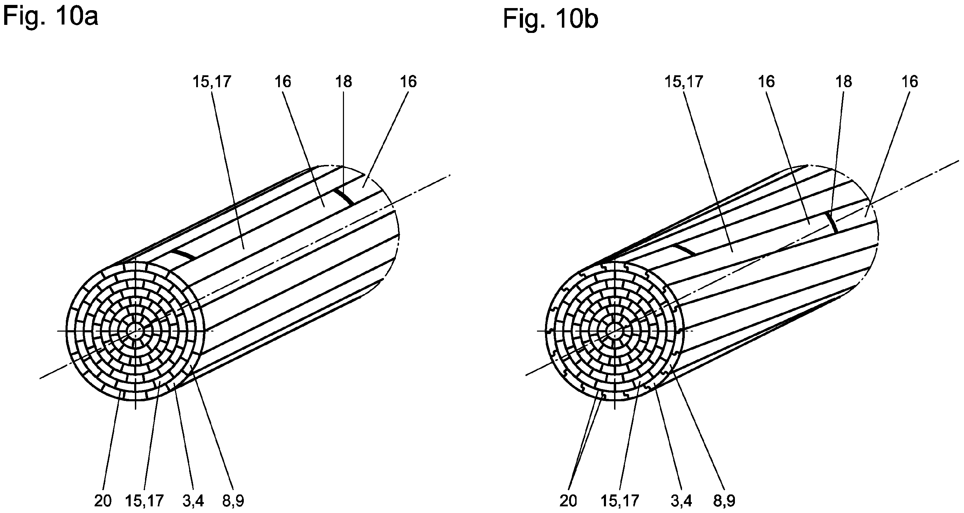

Fig. 10a zeigt eine weitere Ausführungsform eines erfindungsgemäßen Zugkörpers, bei der die Zugelemente 4 bzw. die Zugelementanordnungen 3 sektorförmig aneinander gereiht sind, sodass schichtförmig aufgebaut ein runder Körper gebildet ist.

Fig. 10b zeigt eine weitere Ausführungsform eines Zugkörpers, der insgesamt einen runden Querschnitt aufweist. Dabei sind die Zugelemente bzw. die Zugelementanordnungen sektorförmig aneinander gereiht. Gegebenenfalls weisen die einzelnen Zugelemente z-förmige Profile auf, deren Fortsätze ineinander greifen. Bei der Ausführungsform der Fig. 10b verlaufen die Zugelementanordnungen 3 schräg zur Längserstreckungsrichtung des Zugkörpers. Durch diese schräge, spiralförmige Anordnung kann die Festigkeit des Zugkörpers weiter verbessert werden. Gegebenenfalls sind unterschiedliche Schichten in unterschiedliche Richtung verdreht, sodass eine kreuzförmige Anordnung der Zugelementanordnungen unterschiedlicher Schichten entsteht.

In allen Ausführungsformen können die Zugelemente auch derartige kreuzförmige Anordnungen aufweisen. Dabei ist nicht unbedingt ein runder, sektorförmiger Aufbau notwendig. Auch schrägverlaufende Lagen, die parallel zueinander angeordnet sind, entsprechen dem Erfindungsgedanken.

Gemäß einer weiteren, nicht dargestellten, Ausführungsform ist der erfindungsgemäße Zugkörper derart ausgebildet, dass die einzelnen Zugelementanordnungen im Querschnitt raster- oder wabenförmig aneinander gereiht sind. Beispielsweise können die einzelnen Zugelementanordnungen einen sechseckigen Querschnitt bzw. ein sechseckiges Profil aufweisen, sodass mehrere Zugelementanordnungen wabenförmig miteinander verbunden werden können, wobei eine erste Zugelementanordnung an ihren sechs Verbindungsflächen mit sechs weiteren Zugelementanordnungen verbindbar ist. Ferner können die einzelnen Zugelementanordnungen auch eine rechteckigen, trapezförmigen, dreieckigen oder parallelogrammförmigen oder quadratischen Querschnitt haben, wobei an einer, zwei, drei oder an jeder der Verbindungsflächen dieser Ausführungsformen eine weitere Zugelementanordnung vorgesehen sein kann. Gemäß einer bevorzugten Ausführungsform sind mehrere Zugelementanordnungen seitlich, entlang einer Normalen zur Längserstreckungsrichtung aneinandergereiht und bevorzugt miteinander verbunden.

Dadurch ist ein bandförmiger Körper gebildet. Die Zugelementanordnungen weisen Verbindungsflächen auf, sodass eine flächige Anlage zu den angrenzenden Zugelementanordnungen ermöglicht ist. Bevorzugt sind die Verbindungsflächen ebenenförmig ausgebildet. Gegebenenfalls weisen diese Zugelementanordnungen in der Normalebene der Längserstreckungsrichtung ein rechteckiges Profil auf. Dies bedeutet insbesondere, dass das Verhältnis der größeren Seite zur kleineren Seite kleiner als vier ist. Diese Konfiguration ist beispielsweise in den Fig. 1, Fig. 2 und Fig. 7 dargestellt. Zusätzlich kann eine Zugelementanordnung mit flachem, bandförmigem Profil in der Normalebene der Längserstreckungsrichtung vorgesehen sein. Dies bedeutet insbesondere, dass das Verhältnis der größeren Seite zur kleineren Seite größer als vier ist und/oder dass die Breite der Zugelementanordnung mit flachem, bandförmigem Profil größer ist, als die Breite der Zugelementanordnungen mit rechteckigem Profil. Bevorzugt weist die Zugelementanordnung mit flachem, bandförmigem Profil eine Breite auf, die im Wesentlichen der Breite des bandförmigen Körpers entspricht, der durch die Zugelementanordnungen mit rechteckigem Profil gebildet ist. Ferner können die Zugelemente auch beispielsweise segmentförmig ausgestaltet und aneinandergereiht sein, wie z.B. bei den seilförmigen Ausgestaltungen der Zugkörper gemäß Fig. 10.

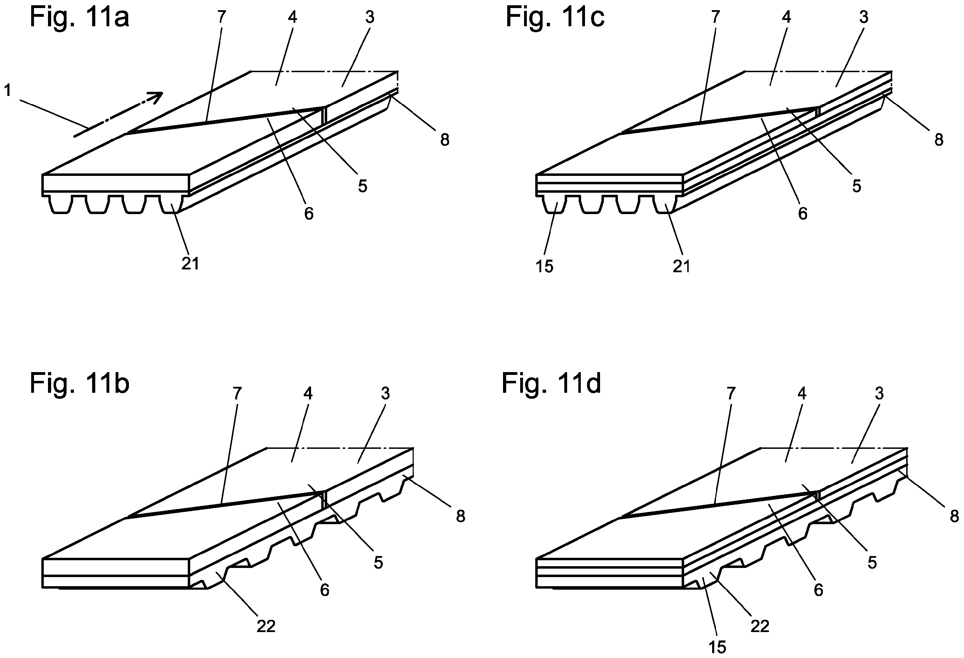

Die Figuren 11a, 11b, 11c und 11d zeigen weitere Ausgestaltungen des erfindungsgemäßen Zugkörpers. Die Zugkörper der Figuren 11a bis d sind insbesondere als zahnriemenförmige oder keilriemenförmige Zugkörper ausgebildet. Bei diesen Ausführungsformen sind mehrere, zumindest zwei, Zugelementanordnungen mit flachem, bandförmigem Profil vorgesehen. Die Zugkörper umfassen jeweils eine erste Zugelementanordnung 3. Diese erste Zugelementanordnung 3 weist eine flache, bandförmige Form auf. Ihr Querschnitt ist im Wesentlichen rechteckförmig und langgestreckt. Die erste Zugelementanordnung 3 umfasst zumindest ein erstes Zugelement 4. Insbesondere ist ein erster Stoßbereich 7 der ersten Zugelementanordnung 3 vorgesehen. Dieser Stoßbereich befindet sich zwischen den beiden Enden 5 und 6 des oder der ersten langgestreckten Zugelemente. Der erste Stoßbereich 7 ist in dieser Ausführungsform schräg angeordnet. Der schräg angeordnete Stoßbereich 7 weist somit einen Winkel zur Längserstreckungsrichtung 1 auf, der von einem 90-grädigen Winkel abweicht. Dies insbesondere, wenn der Winkel in der Ebenen der Flachseite des Zugkörpers gemessen wird. Je weiter der Winkel von einer 90-grädigen Anordnung abweicht, desto größer ist jener Bereich entlang der Längserstreckungsrichtung 1, in dem der Stoßbereich angeordnet ist. Durch diese schräge Anordnung kann die Verteilung der Kräfte auf die weiteren Zugelementanordnungen verbessert werden. In den Figuren 11a bis 11d ist zumindest eine zweite Zugelementanordnung 8 vorgesehen. Diese Zweitzugelementanordnung 8 ist gemäß der vorangegangenen Beschreibung parallel neben der ersten Zugelementanordnung angeordnet und quer zur Längserstreckungsrichtung 1 mit dieser verbunden. Auch die zweite Zugelementanordnung 8 ist in der vorliegenden Ausführungsform als Zugelementanordnung mit flachem, bandförmigen Profil ausgebildet. Die Stoßbereiche oder der Stoßbereich der zweiten Zugelementanordnung 8 sind in den Figuren 11a bis 11d nicht dargestellt. Jedoch können diese ähnlich oder gleich wie die ersten Stoßbereiche ausgebildet sein. Insbesondere sind die zweiten Stoßbereiche und die ersten Stoßbereiche gemäß der vorangegangenen Beschreibung versetzt angeordnet, sodass die jeweiligen Stoßbereiche von dem weiteren Zugelement kräftemäßig überbrückt sind. Gegebenenfalls sind weitere Zugelementanordnungen 15 vorgesehen. Auch diese können beispielsweise ein flaches, bandförmiges Profil aufweisen. Gegebenenfalls weist zumindest eine der Zugelementanordnungen keilförmige Fortsätze 21 oder zahnförmige Fortsätze 22 auf. Eine derartige Konfiguration, bei der mehrere Zugelementanordnungen mit im Wesentlichen flachen, bandförmigen Profil miteinander verbunden sind, kann bei allen gezeigten Ausführungsformen vorgesehen sein. Auch der schräg verlaufende Stoßbereich, der eine Verbesserung der kräftemäßigen Überbrückung bewirkt, kann bei allen gezeigten Ausführungsformen der Erfindung vorgesehen sein. Beispielsweise kann auch eine Zugelementanordnung mit im Wesentlichen rechteckigem Querschnitt einen schrägen Stoßbereich umfassen.

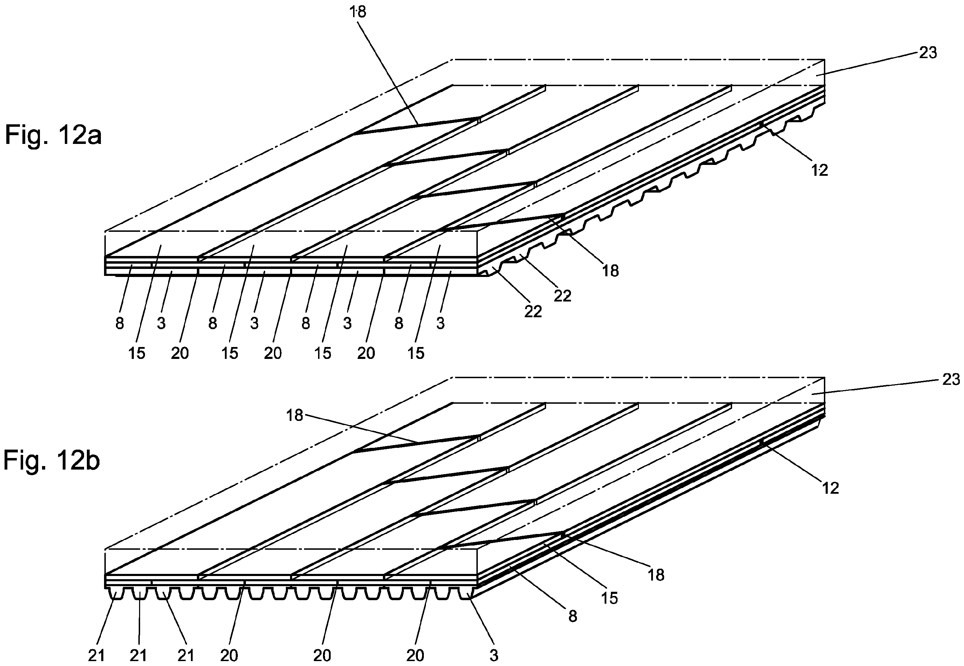

Die Figuren 12a und 12b zeigen zwei weitere Ausführungsformen eines erfindungsgemäßen Zugkörpers. Der Zugkörper der Fig. 12a ist als zahnriemenförmiger Zugkörper ausgebildet. Der Zugkörper der Fig. 12b ist als keilriemenförmiger Zugkörper ausgebildet. Der Zugkörper der Fig. 12a umfasst mehrere erste Zugelementanordnungen 3. Die ersten Zugelementanordnungen 3 weisen ein im Wesentlichen flaches, bangförmiges Profil auf. Zusätzlich umfassen die ersten Zugelementanordnungen 3 zahnförmige Fortsätze 22, um einen Zahnriemen zu bilden. Ferner umfasst der Zugkörper der Fig. 12a mehrere zweite Zugelementanordnungen 8.

Diese zweiten Zugelementanordnungen 8 weisen ebenfalls ein im Wesentlichen flaches, bandförmiges Profil auf. Die zweiten Zugelemenanordnungen 8 sind quer zu ihrer Längserstreckungsrichtung mit den ersten Zugelementanordnungen 3 verbunden. Insbesondere sind die Flachseiten der beiden Zugelementanordnungen 3,8 miteinander verbunden, sodass eine flächige Verbindung gebildet ist. Die jeweiligen Zugelementanordnungen weisen Stoßbereiche auf. Die ersten Zugelementanordnungen 3 weisen erste Stoßbereiche 7 auf. Diese Stoßbereiche 7 sind zwischen den einzelnen Zugelementen der Zugelementanordnungen vorgesehen. Die ersten Zugelementanordnungen 3 sind zu den zweiten Zugelementanordnungen 8 derart angeordnet, dass die Verbindungsstellen zwischen den ersten Zugelementanordnungen 3 von zweiten Zugelementanordnungen 8 in Querrichtung überbrückt sind. So ist eine zweite Zugelementanordnung 8 mit zwei ersten Zugelementanordnungen 3 verbunden. Zwei erste Zugelementanordnungen 3 sind ebenfalls mit einer zweiten Zugelementanordnung 8 verbunden. Wie in den vorangegangenen Ausführungsformen sind die Stoßbereiche einer Zugelementanordnung von den anderen Zugelementanordnungen überlappt und somit kräftemäßig überbrückt. In der Ausführungsform der Fig. 12a sind nicht nur die Stoßbereiche überlappt und kräftemäßig überbrückt, sondern auch die seitlichen Verbindungsflächen 20, entlang derer die ersten Zugelementanordnungen 3 miteinander verbunden sind. Ferner sind auch die Verbindungsflächen 20 zwischen den zweiten Zugelementanordnungen 8 überlappt und kräftemäßig überbrückt. Ferner umfasst der Zugkörper der Fig. 12a weitere Zugelementanordnungen 15, die wiederum ein im Wesentlichen flaches, bandförmiges Profil aufweisen. Auch diese Zugelementanordnungen 15 sind gemäß der vorangegangenen Beschreibung ausgebildet. Insbesondere umfassen sie Stoßbereiche 18, die überlappt und kräftemäßig überbrückt sind. Die weiteren Zugelementanordnungen 15 sind in diesem Fall mit den zweiten Zugelementanordnungen 8 verbunden. Dabei ist jede weitere Zugelementanordnung 15 mit zwei zweiten Zugelementanordnungen 8 verbunden. Dadurch sind die Verbindungsflächen 20 zwischen den zweiten Zugelementanordnungen 8 auch in Querrichtung von den weiteren Zugelementanordnungen 15 überlappt und kräftemäßig überbrückt. Ferner umfasst der Zugkörper gemäß Fig. 12a eine Auflage 23. Diese Auflage 23 kann beispielsweise als Gummiauflage oder elastische Auflage ausgeführt sein. Die Auflage 23 erstreckt sich über den gesamten Zugkörper. Beispielsweise sind derartige Auflagen angeordnet, um eine elastische Schicht eines Bandförderers zu bilden. Die Auflage 23 kann auch zum Schutz der Zugelemente dienen, sodass beispielsweise Abrieb oder Verschleiß an außenliegenden Flächen verringert ist. Der Zugkörper gemäß Fig. 12b entspricht im Wesentlichen dem Zugkörper der Fig. 12a, wobei statt zahnförmigen Fortsätzen 22 keilriemenförmige Fortsätze 21 vorgesehen sind. Diese Fortsätze 21 sind ein Teil der ersten Zugelementanordnungen 3. Ferner sind wirkungsgleich wie in Fig. 12a zweite Zugelementanordnungen 8 und weitere Zugelementanordnungen 15 vorgesehen. Auch eine Auflage 23 ist vorgesehen, die wie in Fig. 12a den gesamten Zugkörper abdeckt. Die Zugkörper der Fig. 12a und 12b sind im Wesentlichen schichtförmig aufgebaut. Die Schichten sind durch quer zur Zugrichtung angeordnete Zugelementanordnungen mit im Wesentlichen flachem, bandförmigem Profil gebildet. In den vorliegenden Fällen sind drei Schichten vorgesehen, wobei eine Schicht durch die erste Zugelementanordnungen, eine Schicht durch die zweiten Zugelementanordnungen und eine Schicht durch die weiteren Zugelementanordnungen gebildet sind. Die Schichten sind jeweils im Wesentlichen flach und bandförmig ausgeführt. Die einzelnen Zugelementanordnungen einer Schicht sind gegenüber den Zugelementanordnungen der weiteren Schicht, mit der sie verbunden sind, in Querrichtung versetzt angeordnet. Dadurch sind die Verbindungsflächen 20 der Zugelementanordnungen ebenfalls überlappt und kräftemäßig überbrückt. Die Stoßbereiche der Ausführungsformen der Fig. 12a und 12b sind wie die Stoßbereiche der Ausführungsformen 11a bis 11d schräg ausgebildet. Die Zugkörper der Fig. 12a und 12b entsprechen im Wesentlichen mehreren seitlich nebeneinander angeordneten Zugkörper der Fig. 11a bis 11d. Zur seitlichen Verbindung sind jedoch die Zugelementanordnungen seitlich überlappend ausgebildet. Gegebenenfalls weisen mehrere Zugelemente und/oder Zugelementanordnungen ein flaches, bandförmiges Profil auf. Ein solches Profil umfasst zwei Schmalseiten und zwei Flachseiten. Gegebenenfalls sind zwei Zugelementanordnungen mit flachem, bandförmigem Profil über ihre Flachseiten miteinander verbunden. Gegebenenfalls sind zwei erste Zugelementanordnungen mit flachem, bandförmigem Profil seitlich nebeneinander angeordnet, sodass die Schmalseiten aneinander liegen, wie beispielsweise in Fig12 gezeigt. Gegebenenfalls ist eine zweite Zugelementanordnung mit flachem, bandförmigem Profil vorgesehen, deren Flachseite mit beiden Flachseiten der ersten Zugelementanordnungen mit flachem, bandförmigem Profil verbunden ist. Dadurch ist die Verbindungsfläche zwischen den Schmalseiten der ersten Zugelementanordnungen mit flachem, bandförmigem Profil überlappt, seitlich kräftemäßig überbrückt und/oder abgedeckt. Gegebenenfalls sind mehrere oder alle Verbindungsflächen zwischen den Schmalseiten der Zugelementanordnungen überlappt, seitlich kräftemäßig überbrückt und/oder abgedeckt, wie beispielsweise in Fig. 12 dargestellt.

Ferner entspricht es ebenfalls dem Erfindungsgedanken, dass der Stoßbereich nur teilweise schräg ausgebildet ist oder, dass die Richtung des Stoßbereichs bzw. die Quererstreckungsrichtung des Stoßbereichs zumindest teilweise von einer normalen ,90-grädigen Richtung zur Längserstreckungsrichtung abweicht. Beispielsweise können auch gebogene oder zackenförmige Verläufe des Stoßbereichs vorgesehen sein.

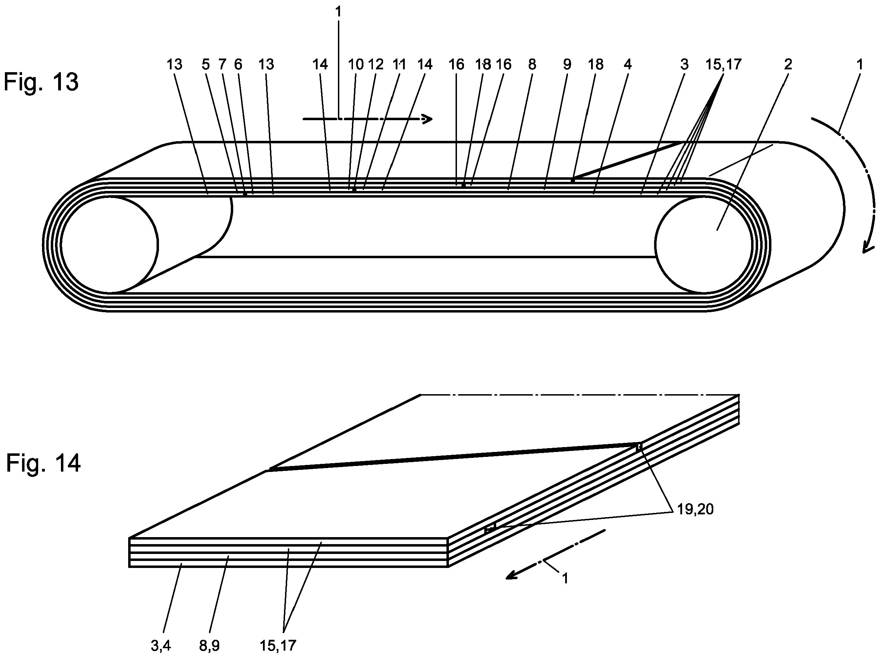

Die Figuren 13 und 14 zeigen weitere Ausgestaltungen eines erfindungsgemäßen Zugkörpers. Die mit Bezugszeichen versehenen Komponenten entsprechen im Wesentlichen den Komponenten anderer Ausführungsformen und insbesondere den Komponenten gemäß Bezugszeichenliste. Ein Zugkörper gemäß Figur 13 und 14 weist mehrere Zugelementanordnungen mit jeweils flachem, bandförmigem Profil auf. Diese Zugelementanordnungen entsprechen beispielsweise den Zugelementanordnungen der Figur 11. Die Zugelementanordnungen sind seitlich, quer zur Längserstreckungsrichtung 1 miteinander verbunden. Insbesondere sind die Flachseiten der Zugelementanordnungen miteinander verbunden. So sind in dieser Ausführungsform vier Zugelementanordnungen aufeinander gestapelt, sodass ein schichtförmig aufgebauter Zugkörper gebildet ist. Die Stoßbereiche der Zugelementanordnungen sind gemäß der vorangegangenen Beschreibung zueinander versetzt angeordnet. Gegebenenfalls sind die Stoßbereiche schräg ausgebildet. Gemäß den vorliegenden Ausführungsformen der Fig. 11, 13 und 14 weisen die einzelnen Zugelementanordnungen mit flachem Profil bevorzugt eine gewisse Breite auf, die der normal zur Längserstreckung gemessenen Breite der Flachseiten entspricht. Diese Breite kann bei allen Zugelementen oder Zugelementanordnungen im Wesentlichen gleich ausgebildet sein. Insbesondere sind die Zugelementanordnungen mit flachem Profil im Wesentlichen deckungsgleich übereinander platziert. In diesem Fall entspricht die Breite der Zugelementanordnungen mit flachem Profil im Wesentlichen der Breite des Zugkörpers. Gegebenenfalls sind, wie in Fig. 11 zu sehen, Zugelemente zur Bildung eines Zahnriemens oder eines Keilriemens ausgebildet. Diese Zugelemente bilden gegebenenfalls eine Ausnahme der Breitendimensionierung. Insbesondere müssen die Zugelemente zur Bildung von Keil- oder Zahnriemen nicht dieselbe Breite aufweisen, wie die deckungsgleich übereinandergestapelten Zugelementanordnungen mit flachem Profil. Gegebenenfalls umfasst ein Zugkörper, insbesondere gemäß Fig. 11, 13 und 14, mehrere Zugelementanordnungen mit jeweils einem flachen, bandförmigen Profil, die aus einem Verbundwerkstoff, aus Faserverbundmatten und/oder aus faserverstärktem Material gebildet sind. Insbesondere können die Zugelementanordnungen aus faserverstärktem Kunststoff gemäß der vorangegangenen Beschreibung ausgebildet sein. Die bandförmige Struktur der Zugelementanordnungen und des gesamten Zugkörpers ermöglicht eine erleichterte Biegung um eine Achse, insbesondere um eine Achse, die normal zur Erstreckungsrichtung entlang der Flachseite verläuft. Eine Biegung um eine Achse, die entlang der Schmalseite verläuft, ist durch bandförmige Konfiguration erschwert. Es bietet sich daher an, diese Konfiguration insbesondere für Riemen zu verwenden, die mit ihren Flachseiten um Umlenkrollen umgelenkt sind. Gemäß einer exemplarischen Ausführungsform kann die Breite der Flachseiten zwischen 3 und 15 cm liegen. Die Höhen bzw. Dicken der einzelnen Zugelementanordnungen können beispielsweise im Bereich von 1 mm liegen. Bei vier übereinander gestapelten Zugelementanordnungen mit flachem, bandförmigem Profil ergibt sich somit eine Höhe von etwa 4 mm. Jedoch entspricht es auch dem Erfindungsgedanken, dass mehr oder weniger als vier Zugelementanordnungen gestapelt sind. Beispielsweise können zwei, vier, sechs, acht oder mehr Zugelementanordnungen gestapelt sein, wodurch sich bei einer Multiplikation mit der Dicke, die beispielsweise im Bereich von 0,5 bis 2 mm liegt, die Gesamthöhe des Zugkörpers ergibt. Die Breite eines exemplarischen Zugkörpers gemäß Figur 13 und 14 kann beispielsweise zwischen 50 und 80 mm liegen. Auch Breiten von bis zu 3m oder mehr entsprechen dem Erfindungsgedanken. Gemäß einer weiteren, nicht dargestellten Ausführungsform können die Stoßbereiche und/oder die Enden Hinterschneidungen oder Fortsätze aufweisen, sodass die beiden Enden der Zugelementanordnung kraft- oder formschlüssig miteinander verbunden sind. Beispielsweise können die beiden Enden, ähnlich einer Verbindung eines Puzzles in eine Richtung ineinander gesteckt werden, wobei eine formschlüssige Verbindung gegen eine Auszugskraft in Längserstreckungsrichtung gegeben ist. Ferner kann an einem Ende eines Zugelements ein Fortsatz vorgesehen sein, der in Längserstreckungsrichtung in eine Ausnehmung des zweiten Endes desselben Stoßbereichs ragt, um eine Zentrierung der fluchtend aneinandergereihten Zugelement oder Enden zu bewirken.

Die Zugelementanordnung mit flachem, bandförmigem Profil kann parallel zum bandförmigen Körper angeordnet sein, der aus den Zugelementanordnungen mit rechteckigem Profil gebildet ist. Ferner kann die Zugelementanordnung mit flachem, bandförmigem Profil mit den Zugelementanordnungen mit rechteckigem Profil verbunden sein. Diese Konfiguration ist beispielsweise in den Fig. 3, Fig.4, Fig.5, Fig. 6, Fig. 8 und Fig. 9 gezeigt.

Bei allen Ausführungsformen sind die Zugelementanordnungen derart ausgebildet, sodass die Stoßbereiche einer Zugelementanordnung von zumindest einem Zugelement einer weiteren Zugelementanordnung überlappt und somit kräftemäßig überbrückt sind. In allen Ausführungsformen können die Zugelemente aus faserverstärkten Materialien gebildet sein. Beispiele für derartige Materialien sind faserverstärkter Kunststoff, glasfaserverstärkter Kunststoff, faserverstärktes Harz, faserverstärktes Polymer, faserverstärktes Duroplast, faserverstärktes Thermoplast und/oder faserverstärktes Elastomer. Die Fasern sind beispielsweise anorganische Verstärkungsfasern, metallische Verstärkungsfasern, organische Verstärkungsfasern oder Naturfasern. Auch Matrixsysteme wie beispielsweise eine thermoplastische Matrix, eine duroplastische Matrix und/oder eine elastomere Matrix können verwendet werden. Bevorzugt weisen die Materialien eine gewisse Elastizität zumindest in eine Richtung auf, sodass der Zugkörper um eine Umlenkscheibe umlenkbar ist. Bevorzugt weisen die Materialien eine hohe Zugfestigkeit und eine hohe Scherkraftstabilität auf, sodass ein Zugkörper mit hoher maximaler Zugkraft gebildet werden kann. Gegebenenfalls sind alle Zugelemente aller Zugelementanordnungen aus demselben Material gebildet. Gegebenenfalls weisen unterschiedliche Zugelementanordnungen unterschiedliche Materialien auf. Gegebenenfalls weisen die Zugelemente einer Zugelementanordnung dieselben Materialien auf. Gegebenenfalls sind die Verbindungskörper aus dem gleichen Material gebildet, wie die Zugelemente. Gegebenenfalls sind die Verbindungskörper aus einem anderen Material gebildet, als die Zugelemente. Gegebenenfalls weisen die Stoßbereiche der Zugelementanordnungen eines Zugkörpers entlang der Längserstreckungsrichtung bei allen Ausführungsformen einen Abstand von einem Meter, zwei Metern, drei Metern, vier Metern, fünf Metern, zehn Metern, zwanzig Metern, dreißig Metern, fünfzig Metern oder einhundert Metern auf; oder der Abstand der Stoßbereiche der Zugelementanordnungen eines Zugkörpers entlang der Längserstreckungsrichtung liegt in einem Bereich zwischen diesen Werten. Gegebenenfalls weisen alle Stoßbereiche den selben Abstand zueinander auf oder die Abstände unterschiedlicher Stoßbereich weichen voneinander ab.
Die Zugkörper können eine Breite von oder zwischen 1 cm, 5cm, 10cm, 15cm, 20cm, 30cm, 50cm, 100cm und/oder 200cm aufweisen. Die Höhe der Zugkörper kann etwa 0, 5cm, 1 cm, 2cm, 3cm, 4cm, 5cm, 10cm, 20cm oder 30cm betragen; oder die Höhe liegt in einem Bereich zwischen diesen Werten. Die Zugelemente können eine Breite von etwa 1 cm, 2cm, 3cm, 4cm, 5cm, 10cm, 20cm oder 50cm aufweisen; oder die Breite liegt in einem Bereich zwischen diesen Werten. Die Zugelemente können eine Höhe von etwa 0,1 cm, 1 cm, 2cm, 3cm, 4cm, 5cm, 10cm oder 20cm aufweisen; oder die Höhe liegt in einem Bereich zwischen diesen Werten. Die Zugelemente mit flachem bandförmigem Profil können eine Breite aufweisen, die zwischen etwa vier und etwa zehn Mal, zwanzig Mal oder fünfzig Mal so groß ist, wie deren Höhe.
Ferner können die Zugkörper auch geringere Querschnittsdimensionen im Bereich von z.B. einigen Millimetern aufweisen. Die Zugelemente dieser Zugkörper können eine Dicke oder eine Höhe im Millimeterbereich aufweisen. Auch Folienartige oder Folienbandartige Zugelemente mit einer Dicke von unter einem Millimeter entsprechen dem Erfindungsgedanken. Gegebenenfalls sind diese Folienartigen oder Folienbandartigen Zugelemente selbstklebend ausgeführt oder mit einer Klebeschicht versehen.

Zur Bildung eines erfindungsgemäßen Zugkörpers können beispielsweise folgende Verfahrensschritte dienen: In einem ersten Schritt können Zugkörper hergestellt werden. Diese Zugkörper werden bevorzugt extrudiert oder pultrudiert. Sie bestehen gemäß einer bevorzugten Ausführungsform aus faserverstärktem Kunststoff bzw. aus einem Verbundwerkstoff. Je nach Ausführungsform werden die Zugkörper mit unterschiedlichen Profilen oder mit gleichen Profilen versehen. Beispielsweise kann das Profil bandförmig flach ausgebildet sein. Gegebenenfalls ist das Profil im Wesentlichen rechteckig ausgebildet. Gemäß einer bevorzugten Ausführungsform können auch Profile mit keilförmigen Fortsätzen oder Zähnen hergestellt werden, um Zahnriemen oder Keilriemen zu bilden. Die Zugelemente weisen jeweils zwei Endabschnitte auf. Zur Bildung eines umlaufenden Riemens können in einem weiteren Schritt die beiden Endabschnitte fluchtend aneinander gereiht werden, sodass eine ringförmige Zugelementanordnung gebildet ist. Gegebenenfalls können mehrere Zugkörper fluchtend aneinander gereiht werden, sodass eine ringförmige Zugelementanordnung gebildet ist. Auch bei dieser Ausführungsform werden Endabschnitte der Zugelemente fluchtend aneinander gereiht, wobei die beiden Endabschnitte, die zueinander weisend angeordnet sind, von zwei unterschiedlichen Zugelementen stammen. In einem weiteren Schritt werden mehrere derartige Zugelementanordnungen seitlich aneinander gereiht. Insbesondere werden sie seitlich, also quer zur Längserstreckungsrichtung der Zugelementanordnungen aneinander gereiht. Die Stoßbereiche, die zwischen zwei Endabschnitten vorgesehen sind, werden dabei zu anderen Stoßbereichen versetzt angeordnet, sodass die Stoßbereiche kräftemäßig durch die weiteren Zugelementanordnungen überbrückt werden. Das Verbinden der einzelnen Zugelementanordnungen miteinander geschieht beispielsweise über einen Verbindungskörper. Der Verbindungskörper ist beispielsweise eine Klebeschicht, ein Klebekörper, ein beidseitiges Klebeband oder eine Verschweißung. Bei einer Verklebung sind zwei Zugelementanordnungen über den Verbindungskörper direkt miteinander verbunden. Gegebenenfalls sind die Zugelementanordnungen flach und bandförmig ausgebildet. In diesem Fall ist es vorteilhaft, die Flachseiten der Zugelementanordnungen miteinander zu verbinden. Gegebenenfalls können diese versetzt angeordnet sein, sodass die Flachseite einer Zugelementanordnungen mit zwei darunter oder darüber liegenden Zugelementanordnungen verbunden wird. Bevorzugt handelt es sich bei den Zugelementen um eigenständige, getrennte Körper, die miteinander verbunden werden. Im Falle einer Verschweißung kann über eine stoffschlüssige Verbindung eine quasi-einstückige Ausgestaltung gegeben sein. Jedoch sind die Ausgangselemente zur Bildung des Zugkörpers bevorzugt eigenständige, getrennte Körper. Bevorzugt weisen die Zugkörper eine glatte Außenseite auf. Keilriemenförmige Zugkörper weisen eine glatte Außenseite in Längserstreckungsrichtung auf, wenn sie mit konstantem Profil ausgebildet sind. Durch die glatte Außenseite, insbesondere die glatte Außenseite in Längserstreckungsrichtung, ist beispielsweise die Laufruhe von bewegten und um Umlenkrollen umgelenkten Zugkörpern verbessert. Im Gegensatz zu herkömmlichen Seilen ist der erfindungsgemäße Zugkörper bevorzugt nicht aus verdrillten, geflochtenen oder verwobenen Litzen gebildet, die einem Seil die charakteristische raue Oberfläche verleihen. Der erfindungsgemäße Zugkörper ist bevorzugt aus parallel verlaufenden Zugelementanordnungen gebildet, die direkt und bevorzugt flächig miteinander verbunden sind.

### Bezugszeichenliste

- 1: Längserstreckungsrichtung
- 2: Umlenkrolle
- 3: Erste Zugelementanordnung
- 4: Erstes Zugelement
- 5: Ende des ersten langgestreckten Zugelements
- 6: Ende des ersten langgestreckten Zugelements
- 7: Erster Stoßbereich
- 8: Zweite Zugelementanordnung
- 9: Zweites Zugelement
- 10: Ende des zweiten langgestreckten Zugelements
- 11: Ende des zweiten langgestreckten Zugelements
- 12: Zweiter Stoßbereich
- 13: Erster Endabschnitt
- 14: Zweiter Endabschnitt
- 15: Weitere Zugelementanordnung
- 16: Weiterer Endabschnitt
- 17: Weiteres Zugelement
- 18: Weiterer Stoßbereich
- 19: Verbindungskörper
- 20: Verbindungsfläche
- 21: Keilförmiger Fortsatz
- 22: Zahnförmiger Fortsatz
- 23: Auflage
- 24: Zwischenkörper

## Patentansprüche

1. Zugkörper, der quer zu seiner Längserstreckungsrichtung (1) elastisch verformbar und dadurch gegebenenfalls um eine Umlenkrolle (2) umlenkbar ist, wobei folgende Komponenten vorgesehen sind:
- eine erste Zugelementanordnung (3) umfassend zwei oder mehr erste Endabschnitte (13) eines oder mehrerer langgestreckter erster Zugelemente (4), wobei die ersten Endabschnitte (13) entlang der Längserstreckungsrichtung (1) im Wesentlichen fluchtend aneinandergereiht sind und wobei zwischen jeweils zwei zueinander weisenden ersten Endabschnitten (13) ein erster Stoßbereich (7) vorgesehen ist,
- eine zweite Zugelementanordnung (8) umfassend zwei oder mehr zweite Endabschnitte (14) eines oder mehrerer langgestreckter zweiter Zugelemente (9), wobei die zweiten Endabschnitte (14) entlang der Längserstreckungsrichtung (1) im Wesentlichen fluchtend aneinandergereiht sind und wobei zwischen jeweils zwei zueinander weisenden zweiten Endabschnitten (14) ein zweiter Stoßbereich (12) vorgesehen ist,
- wobei die erste Zugelementanordnung (3) und die zweite Zugelementanordnung (8) parallel nebeneinander verlaufend seitlich, also quer zur Längserstreckungsrichtung (1), miteinander verbunden sind,
- und wobei der oder die ersten Stoßbereiche (7) der ersten Zugelementanordnung (3) gegenüber dem oder den zweiten Stoßbereichen (12) der zweiten Zugelementanordnung (8) in Längserstreckungsrichtung (1) versetzt angeordnet sind, sodass der oder die Stoßbereiche (7, 12) der einen Zugelementanordnung (3, 8) jeweils von einem Zugelement (4, 9) der anderen Zugelementanordnung (3, 8) überlappt und somit kräftemäßig überbrückt sind,
**dadurch gekennzeichnet,**
- **dass** zwei oder mehrere Zugelementanordnungen (3, 8) seitlich nebeneinander entlang einer Normalen zur Längserstreckungsrichtung (1) aneinandergereiht und miteinander verbunden sind und dadurch zusammen einen bandförmigen Körper bilden,
- **dass** die zumindest zwei miteinander verbundenen Zugelementanordnungen (3, 8) ein flaches, bandförmiges Profil aufweisen,
- **dass** die zwei oder mehreren Zugelementanordnungen (3, 8) mit jeweils flachem, bandförmigem Profil, jeweils zwei Schmalseiten und zwei Flachseiten aufweisen,
- und **dass** zwei Zugelementanordnungen (3, 8) mit flachem, bandförmigem Profil seitlich, also quer zur Längserstreckungsrichtung (1), nebeneinander angeordnet sind, sodass jeweils zwei Flachseiten einander zugewandt und miteinander verbunden sind.

2. Zugkörper nach einem der Ansprüche 1, **dadurch gekennzeichnet, dass** eine oder mehrere weitere Zugelementanordnungen (15) vorgesehen sind, die jeweils folgende Komponenten umfassen:
- zwei oder mehr weitere Endabschnitte (16) eines oder mehrerer langgestreckter weiterer Zugelemente (17),
wobei die weiteren Endabschnitte (16) entlang der Längserstreckungsrichtung (1) im Wesentlichen fluchtend aneinandergereiht sind
und wobei zwischen jeweils zwei zueinander weisenden weiteren Endabschnitten (16) ein weiterer Stoßbereich (18) vorgesehen ist,
- und dass der oder die weiteren Stoßbereiche (18) der weiteren Zugelementanordnungen (15) gegenüber dem oder den Stoßbereichen (7, 12) der ersten und der zweiten Zugelementanordnung (3, 8) in Längserstreckungsrichtung (1) versetzt angeordnet sind,
- sodass die Stoßbereiche (18) der weiteren Zugelementanordnungen (15) von jeweils einem Zugelement (4, 9, 17) der ersten Zugelementanordnung (3) oder der zweiten Zugelementanordnung (8) überlappt und somit kräftemäßig überbrückt sind.

3. Zugkörper nach einem der Ansprüche 1 oder 2, **dadurch gekennzeichnet, dass** die Zugelemente (4, 9, 17) jeweils aus einem Verbundwerkstoff, aus Faserverbundmatten und/oder aus faserverstärktem Material wie insbesondere faserverstärkter Kunststoff, glasfaserverstärkter Kunststoff, faserverstärktes Harz, faserverstärktes Polymer, faserverstärktes Duroplast, faserverstärktes Thermoplast und/oder faserverstärktes Elastomer gebildet sind, wobei die Fasern insbesondere anorganische Verstärkungsfasern, metallische Verstärkungsfasern, organische Verstärkungsfasern, mineralisch Fasern und/oder Naturfasern sind.

4. Zugkörper nach einem der Ansprüche 1 bis 3, **dadurch gekennzeichnet, dass** die seitliche Verbindung der Zugelementanordnungen (3, 8, 15) eine stoffschlüssige Verbindung wie beispielsweise eine Klebeverbindung, eine Schweißverbindung und/oder eine formschlüssige Verbindung wie beispielsweise eine seitliche Verzahnung ist.

5. Zugkörper nach einem der Ansprüche 1 bis 4, **dadurch gekennzeichnet, dass** zur Verbindung zweier Zugelementanordnungen (3, 8, 15) ein Verbindungskörper (19) vorgesehen ist, der
- als zwischen den Zugelementanordnungen (3, 8, 15) angeordnete Klebeschicht,
- als zwischen den Zugelementanordnungen (3, 8, 15) angeordnetes beidseitiges Klebeband,
- als zwischen den Zugelementanordnungen (3, 8, 15) angeordnete Verschweißung,
- als zwischen den Zugelementanordnungen (3, 8, 15) angeordneter Verbindungskörper (19),
- oder als parallel zu den Zugelementanordnungen (3, 8, 15) verlaufender und die Zugelementanordnungen (3, 8, 15) überspannender Verbindungskörper (19) ausgebildet ist.

6. Zugkörper nach einem der Ansprüche 1 bis 5, **dadurch gekennzeichnet, dass** Zugelemente (4, 9, 17) und/oder Zugelementanordnungen (3, 8, 15) mit jeweils einem flachen, bandförmigen Profil vorgesehen sind, die jeweils zwei Schmalseiten und zwei Flachseiten aufweisen, dass zwei erste Zugelementanordnungen (3) mit flachem, bandförmigem Profil seitlich nebeneinander angeordnet sind, sodass zwei Schmalseiten einander zugewandt nebeneinander liegen oder miteinander verbunden sind, dass zumindest eine zweite Zugelementanordnung (8) mit flachem, bandförmigem Profil vorgesehen ist, deren Flachseite mit jeweils einer Flachseite der beiden ersten Zugelementanordnungen (3) mit flachem, bandförmigem Profil verbunden ist, sodass der Bereich der einander zugewandten Schmalseiten der ersten Zugelementanordnungen (3) mit flachem, bandförmigem Profil überlappt, seitlich kräftemäßig überbrückt, abgedeckt und/oder entlang der Längserstreckungsrichtung (1) abgedeckt ist.

7. Zugkörper nach einem der Ansprüche 1 bis 6, **dadurch gekennzeichnet,**
- **dass** der Querschnitt der Zugelementanordnungen (3, 8, 15) mit flachem, bandförmigem Profil jeweils im Wesentlichen rechteckförmig und langgestreckt ist,
- oder dass die Zugelemente (4, 9, 17) mit flachem, bandförmigem Profil eine Breite aufweisen, die zwischen etwa vier und etwa zehn Mal, zwanzig Mal oder fünfzig Mal so groß ist, wie deren Höhe
- oder dass die Zugelemente (4, 9, 17) als folienartige oder folienbandartige Zugelemente (4, 9, 17) mit einer Dicke von unter einem Millimeter ausgebildet sind, die gegebenenfalls selbstklebend ausgeführt oder mit einer Klebeschicht versehen sind.

8. Zugkörper nach einem der Ansprüche 1 bis 7, **dadurch gekennzeichnet, dass** die Flachseiten der Zugelementanordnungen (3, 8, 15) im Wesentlichen seitlich deckungsgleich übereinander angeordnet sind, wobei die Stoßstellen in Längserstreckungsrichtung (1) versetzt angeordnet sind,
und/oder dass die normal zur Längserstreckung gemessene Breite der Flachseiten der Breite des gesamten Zugkörpers entspricht.

9. Zugkörper nach einem der Ansprüche 1 bis 8, **dadurch gekennzeichnet, dass** der Zugkörper als bandförmiger Zugriemen ausgebildet ist, der quer zu seiner Längserstreckungsrichtung (1) um seine Flachseite um eine Umlenkrolle (2) umlenkbar oder umgelenkt ist.

10. Zugkörper nach einem der Ansprüche 1 bis 9, **dadurch gekennzeichnet, dass** jeder Stoßbereich (7, 12, 18) jeder Zugelementanordnung (3, 8, 15) gegenüber allen weiteren Stoßbereichen (18) der anderen Zugelementanordnungen (3, 8, 15) in Längserstreckungsrichtung (1) versetzt angeordnet ist, sodass jeder Stoßbereich (7, 12, 18) von einem Zugelement (4, 9, 17) jeder anderen Zugelementanordnung (3, 8, 15) überlappt und kräftemäßig überbrückt ist.

11. Zugkörper nach einem der Ansprüche 1 bis 10, **dadurch gekennzeichnet, dass** eine Zugelementanordnung (3, 8, 15), insbesondere jede Zugelementanordnung (3, 8, 15), im Wesentlichen entlang der gesamten Länge ihrer Zugelemente (4, 9, 17), durchgehend oder abschnittsweise, mit einer weiteren angrenzenden Zugelementanordnung(en) (3, 8, 15) seitlich verbunden ist,
oder dass zwei miteinander verbundene Zugelementanordnungen (3, 8, 15) im Wesentlichen entlang der gesamten Länge ihrer Zugelemente (4, 9, 17) seitlich miteinander verbunden sind.

12. Zugkörper nach einem der Ansprüche 1 bis 11, **dadurch gekennzeichnet, dass** die Zugelemente (4, 9, 17) einer Zugelementanordnung (3, 8, 15) jeweils zumindest eine entlang der Längserstreckungsrichtung (1) an den Außenseiten der Zugelemente (4, 9, 17) verlaufende Verbindungsfläche (20) aufweisen, über die die Zugelementanordnung (3, 8, 15) mit einer weiteren Zugelementanordnung (15) verbunden ist,
und dass die Verbindungsfläche (20) bevorzugt im Wesentlichen ebenenförmig und/oder plan ausgebildet ist.

13. Zugkörper nach Anspruch 12, **dadurch gekennzeichnet, dass** die plane Verbindungsfläche (20) einer Zugelementanordnung (3, 8, 15) über einen Verbindungskörper (19) mit der planen Verbindungsfläche (20) einer weiteren Zugelementanordnung (15) verbunden ist.

14. Zugkörper nach einem der Ansprüche 1 bis 13, **dadurch gekennzeichnet, dass** ein Zugelement (4, 9, 17) der ersten Zugelementanordnung (3) seitlich mit zwei Zugelementen (4, 9, 17) einer benachbarten zweiten Zugelementanordnung (8) verbunden ist, sodass der Stoßbereich (7, 12, 18) der zweiten Zugelementanordnung (8) durch das Zugelement (4, 9, 17) der ersten Zugelementanordnung (3) überlappt und kräftemäßig überbrückt ist.

15. Zugkörper nach einem der Ansprüche 1 bis 14, **dadurch gekennzeichnet, dass** zwei oder mehrere Zugelementanordnungen (3, 8, 15) über eine weitere Zugelementanordnung (15) miteinander verbunden sind.

## Claims

1. A traction member, which is elastically deformable transversely to the direction of its longitudinal extent (1) and as a result can, where appropriate, be deflected around a deflection roller (2), the following components being provided:
- a first traction element arrangement (3), comprising two or more first end sections (13) of one or more elongate first traction elements (4), the first end sections (13) being lined up substantially flush with each other in the direction of longitudinal extent (1), and a first abutment region (7) being provided between each pair of first end sections (13) facing each other,
- a second traction element arrangement (8), comprising two or more second end sections (14) of one or more elongate second traction elements (9), the second end sections (14) being lined up substantially flush with each other in the direction of longitudinal extent (1), and a second abutment region (12) being provided between each pair of second end sections (14) facing each other,
- the first traction element arrangement (3) and the second traction element arrangement (8) being connected to each other such that they run parallel to each other laterally, that is, transversely to the direction of longitudinal extent (1),
- and the first abutment region(s) (7) of the first traction element arrangement (3) being arranged offset in the direction of longitudinal extent (1) relative to the second abutment region(s) (12) of the second traction element arrangement (8) so that the abutment region(s) (7, 12) of one traction element arrangement (3, 8) are each overlapped by a traction element (4, 9) of the other traction element arrangement (3, 8) and are thus bypassed in terms of force, **characterised in that**
- two or more traction element arrangements (3, 8) are lined up laterally next to each other along a normal to the direction of longitudinal extent (1) and connected to each other and thereby together form a strip-shaped member,
- the at least two traction element arrangements (3, 8) connected to each other have a flat, strip-shaped profile,
- the two or more traction element arrangements (3, 8), each with a flat, strip-shaped profile, each have two short sides and two flat sides,
- and two traction element arrangements (3, 8) are arranged with the flat, strip-shaped profile laterally, that is, transversely to the direction of longitudinal extent (1) next to each other so that in each case two flat sides face each other and are connected to each other.

2. The traction member according to Claim 1,
**characterised in that**
one or more further traction element arrangements (15) are provided, which each comprise the following components:
- two or more further end sections (16) of one or more elongate further traction elements (17), the further end sections (16) being lined up substantially flush with each other in the direction of longitudinal extent (1), and a further abutment region (18) being provided between each pair of further end sections (16) facing each other,
- and the further abutment region (s) (18) of the further traction element arrangements (15) are arranged offset in the direction of longitudinal extent (1) relative to the abutment regions (7, 12) of the first and second traction element arrangements (3, 8),
- so that the abutment regions (18) of the further traction element arrangements (15) are overlapped by in each case one traction element (4, 9, 17) of the first traction element arrangement (3) or of the second traction element arrangement (8) and thus bypassed in terms of force.

3. The traction member according to one of Claims 1 or 2,
**characterised in that**
the traction elements (4, 9, 17) are each formed from a composite material, from composite fibre mats and/or from fibre-reinforced material such as in particular fibre-reinforced plastic, fibreglass-reinforced plastic, fibre-reinforced resin, fibre-reinforced polymer, fibre-reinforced thermoset, fibre-reinforced thermoplastic and/or fibre-reinforced elastomer, wherein the fibres are in particular inorganic reinforcement fibres, metallic reinforcement fibres, organic reinforcement fibres, mineral fibres and/or natural fibres.

4. The traction member according to any one of Claims 1 to 3,
**characterised in that**
the lateral connection of the traction element arrangements (3, 8, 15) is an integral connection such as an adhesive connection, a welded connection and/or a form-fitting connection such as lateral teeth.

5. The traction member according to any one of Claims 1 to 4,
**characterised in that**
to connect two traction element arrangements (3, 8, 15), a connection member (19) is provided, which is in the form of
- an adhesive layer arranged between the traction element arrangements (3, 8, 15),
- a double-sided adhesive strip arranged between the traction element arrangements (3, 8, 15),
- a weld arranged between the traction element arrangements (3, 8, 15),
- a connection member (19) arranged between the traction element arrangements (3, 8, 15),
- or a connection member (19) that runs parallel to the traction element arrangements (3, 8, 15) and fits over the traction element arrangements (3, 8, 15).

6. The traction member according to any one of Claims 1 to 5,
**characterised in that**
traction elements (4, 9, 17) and/or traction element arrangements (3, 8, 15) are each provided with a flat, strip-shaped profile, which has in each case two short sides and two flat sides, that two first traction element arrangements (3) are arranged with the flat, strip-shaped profile laterally next to each other so that two short sides lie next to each other or are connected to each other facing each other, that at least one second traction element arrangement (8) is provided with a flat, strip-shaped profile, the flat side of which is connected in each case to a flat side of the two first traction element arrangements (3) with a flat, strip-shaped profile, so that the region of the short sides facing each other of the first traction element arrangements (3) with a flat, strip-shaped profile is overlapped, bypassed laterally in terms of force, covered and/or covered in the direction of longitudinal extent (1).

7. The traction member according to any one of Claims 1 to 6,
**characterised in that**
- the cross-section of the traction element arrangements (3, 8, 15) with the flat, strip-shaped profile is in each case substantially rectangular and elongate,
- or the traction elements (4, 9, 17) with the flat, strip-shaped profile have a width that is between approximately four and approximately ten times, twenty times or fifty times the height thereof,
- or the traction elements (4, 9, 17) are in the form of film-like or film-strip-like traction elements (4, 9, 17) that have a thickness of less than one millimetre and are self-adhesive or provided with an adhesive layer, if appropriate.

8. The traction member according to any one of Claims 1 to 7,
**characterised in that**
the flat sides of the traction element arrangements (3, 8, 15) are arranged one above the other in a substantially laterally aligned manner, wherein the abutment points are arranged offset in the direction of longitudinal extent (1), and/or the width of the flat sides, measured normally to the longitudinal extent, corresponds to the width of the overall traction member.

9. The traction member according to any one of Claims 1 to 8,
**characterised in that**
the traction member is in the form of a strip-shaped traction belt, which can be deflected or is deflected around a deflection roller (2) around the flat side of the traction belt, transversely to the direction of longitudinal extent (1) of the traction belt.

10. The traction member according to any one of Claims 1 to 9,
**characterised in that**
each abutment region (7, 12, 18) of each traction element arrangement (3, 8, 15) is arranged offset in the direction of longitudinal extent (1) relative to all the other abutment regions (18) of the other traction element arrangements (3, 8, 15) so that each abutment region (7, 12, 18) is overlapped by a traction element (4, 9, 17) of each other traction element arrangement (3, 8, 15) and bypassed in terms of force.

11. The traction member according to any one of Claims 1 to 10,
**characterised in that**
a traction element arrangement (3, 8, 15), in particular each traction element arrangement (3, 8, 15), is connected laterally to a further, adjacent traction element arrangement(s) (3, 8, 15) continuously or in some sections substantially along the entire length of the traction elements (4, 9, 17) thereof, or two connected traction element arrangements (3, 8, 15) are connected laterally to each other substantially along the entire length of the traction elements (4, 9, 17) thereof.

12. The traction member according to any one of Claims 1 to 11,
**characterised in that**
the traction elements (4, 9, 17) of a traction element arrangement (3, 8, 15) each have at least one connecting face (20), which runs in the direction of longitudinal extent (1) on the outer sides of the traction elements (4, 9, 17) and via which the traction element arrangement (3, 8, 15) is connected to a further traction element arrangement (15), and the connecting face (20) is preferably substantially even and/or planar.

13. The traction member according to Claim 12,
**characterised in that**
the planar connecting face (20) of a traction element arrangement (3, 8, 15) is connected to the planar connecting face (20) of a further traction element arrangement (15) by means of a connection member (19).

14. The traction member according to any one of Claims 1 to 13,
**characterised in that**
a traction element (4, 9, 17) of the first traction element arrangement (3) is laterally connected to two traction elements (4, 9, 17) of an adjacent second traction element arrangement (8) so that the abutment region (7, 12, 18) of the second traction element arrangement (8) is overlapped by the traction element (4, 9, 17) of the first traction element arrangement (3) and bypassed in terms of force.

15. The traction member according to any one of Claims 1 to 14,
**characterised in that**
two or more traction element arrangements (3, 8, 15) are connected to each other by means of a further traction element arrangement (15).

## Revendications

1. Corps de traction qui peut être déformé élastiquement transversalement à sa direction d'extension longitudinale (1) et peut être de ce fait renvoyé le cas échéant autour d'un rouleau de renvoi (2), les composants suivants étant prévues :
- un premier agencement d'éléments de traction (3) comprenant deux premières sections finales (13) ou plus d'un ou plusieurs premiers éléments de traction allongés (4), les premières sections finales (13) étant juxtaposées pour l'essentiel de façon affleurante le long de la direction d'extension longitudinale (1) et une première zone de choc (7) étant prévue entre respectivement deux premières sections finales (13) se faisant face,
- un deuxième agencement d'éléments de traction (8) comprenant deux deuxièmes sections finales (14) ou plus d'un ou plusieurs deuxièmes éléments de traction allongés (9), les deuxièmes sections finales (14) étant juxtaposées pour l'essentiel de façon affleurante le long de la direction d'extension longitudinale (1) et une deuxième zone de choc (12) étant prévue entre respectivement deux deuxièmes sections finales (14) se faisant face ,
- le premier agencement d'éléments de traction (3) et le deuxième agencement d'éléments de traction (8) étant reliés l'un à l'autre latéralement passant parallèlement l'un à côté de l'autre, donc transversalement à la direction d'extension longitudinale (1),
- et la ou les premières zones de choc (7) du premier agencement d'éléments de traction (3) étant disposées décalées par rapport à la ou aux deuxièmes zones de choc (12) du deuxième agencement d'éléments de traction (8) dans la direction d'extension longitudinale (1) de telle manière que la ou les zones de choc (7,12) d'un agencement d'éléments de traction (3,8) sont chevauchées respectivement par un élément de traction (4,9) de l'autre agencement d'éléments de traction (3,8) et sont ainsi reliées par conformité des forces,
**caractérisé en ce que**
- deux ou plusieurs agencements d'éléments de traction (3,8) sont juxtaposés latéralement l'un à côté de l'autre le long d'une perpendiculaire par rapport à la direction d'extension longitudinale (1) et sont reliés l'un à l'autre et forment ensemble de ce fait un corps en forme de bande,
- **en ce qu'**au moins les deux agencements d'éléments de traction (3,8) reliés entre eux présentent un profil plat en forme de bande,
- **en ce que** les deux ou plusieurs agencements d'éléments de traction (3,8) avec respectivement un profil plat en forme de bande comportent respectivement deux côtés étroits et deux côtés plats,
- et **en ce que** deux agencements d'éléments de traction (3,8) avec un profil plat en forme de bande sont disposés latéralement l'un à côté de l'autre, donc transversalement à la direction d'extension longitudinale (1) de telle manière que respectivement deux côtés plats sont tournés l'un vers l'autre et sont reliés entre eux.

2. Corps de traction selon la revendication 1, **caractérisé en ce qu'**un ou plusieurs autres agencements d'éléments de traction (15) sont prévus, qui comprennent respectivement les composants suivants :
- deux autres sections finales (16) ou plus d'un ou plusieurs autres éléments de traction (17) allongés,
les autres sections finales (16) étant juxtaposées pour l'essentiel de manière affleurante le long de la direction d'extension longitudinale (1)
et une autre zone de choc (18) étant prévue entre respectivement deux autres sections finales (16) tournées l'une vers l'autre et
- **en ce que** la ou les autres zones de choc (18) des autres agencements d'éléments de traction (15) sont disposées décalées dans la direction de l'extension longitudinale (1) par rapport à la ou aux zones de choc (7,12) du premier et du deuxième agencement d'éléments de traction (3,8),
- de telle manière que les zones de choc (18) des autres agencements d'éléments de traction (15) sont chevauchées par respectivement un élément de traction (4,9,17) du premier agencement d'éléments de traction (3) ou du deuxième agencement d'éléments de traction (8) et de ce fait reliés par conformité des forces.

3. Corps de traction selon l'une quelconque des revendications 1 ou 2, **caractérisé en ce que** les éléments de traction (4,9,17) sont respectivement formés d'un matériau composite, de mats composites en fibres et/ou de matériau renforcé aux fibres comme notamment la matière plastique renforcée aux fibres, la matière plastique renforcée aux fibres de verre, la résine renforcée aux fibres, le polymère renforcé aux fibres, le plastique thermodurcissable renforcé aux fibres, le thermoplastique renforcé aux fibres et/ou l'élastomère renforcé aux fibres, les fibres étant notamment des fibres de renfort minérales, des fibres de renfort métalliques, des fibres de renfort organiques, des fibres de renfort minérales, des fibres minérales et/ou des fibres naturelles.

4. Corps de traction selon l'une quelconque des revendications 1 à 3, **caractérisé en ce que** la liaison latérale des agencements d'éléments de traction (3,8,15) est une liaison par conformité de matière comme par exemple une liaison collée, une liaison soudée et/ou une liaison par conformité de forme comme par exemple une denture latérale.

5. Corps de traction selon l'une quelconque des revendications 1 à 4, **caractérisé en ce que** pour lier deux agencements d'éléments de traction (3,8,15) un corps de liaison (19) est prévu, qui est constitué
- comme couche adhésive disposée entre les agencements d'éléments de traction (3,8,15),
- comme bande adhésive bilatérale disposée entre les agencements d'éléments de traction (3,8,15),
- comme soudage disposé entre les agencements d'éléments de traction (3,8,15),
- comme corps de liaison (19) disposé entre les agencements d'éléments de traction (3,8,15),
- ou comme corps de liaison (19) passant parallèlement aux agencements d'éléments de traction (3,8,15) et reliant les agencements d'éléments de traction (3, 8, 15).

6. Corps de traction selon l'une quelconque des revendications 1 à 5, **caractérisé en ce que** des éléments de traction (4,9,17) et/ou des agencements d'éléments de traction (3,8,15) avec respectivement un profil plat en forme de bande sont prévus, qui comportent respectivement deux côtés étroits et deux côtés plats, **en ce que** deux premiers agencements d'éléments de traction (3) avec un profil plat en forme de bande sont disposés latéralement l'un à côté de l'autre de telle manière que deux côtés étroits se situent l'un à côté de l'autre tournés l'un vers l'autre ou sont reliés l'un à l'autre, **en ce qu'**au moins un deuxième agencement d'éléments de traction (8) avec un profil plat en forme de bande est prévu, dont le côté plat est relié respectivement à un côté plat des deux premiers agencements d'éléments de traction (3) avec profil plat en forme de bande de telle manière que la zone des côtés étroits tournés l'un vers l'autre des premiers agencements d'éléments de traction (3) avec profil plat en forme de bande est chevauchée, reliée latéralement par conformité des forces, recouverte
et/ou recouverte le long de la direction d'extension longitudinale (1).

7. Corps de traction selon l'une quelconque des revendications 1 à 6, **caractérisé en ce que**
- la section des agencements d'éléments de traction (3,8,15) avec profil plat en forme de bande est respectivement pour l'essentiel de forme rectangulaire et allongée,
- ou **en ce que** les éléments de traction (4,9,17) avec profil plat en forme de bande comportent une largeur, qui est entre environ quatre et à peu près dix fois, vingt fois ou cinquante fois aussi grande que la hauteur de ceux-ci,
- ou **en ce que** les éléments de traction (4,9,17) sont constitués comme des éléments de traction de type feuille ou bande de feuille (4,9,17) avec une épaisseur inférieure à un millimètre, qui sont exécutés le cas échéant autocollants ou sont dotés d'une couche adhésive.

8. Corps de traction selon l'une quelconque des revendications 1 à 7, **caractérisé en ce que** les côtés plats des agencements d'éléments de traction (3,8,15) sont disposés pour l'essentiel latéralement en couverture identique l'un sur l'autre, les points de choc étant disposés décalés dans la direction d'extension longitudinale (1) et/ou **en ce que** la largeur des côtés plats mesurée perpendiculairement à l'extension longitudinale correspond à la largeur de tout le corps de traction.

9. Corps de traction selon l'une quelconque des revendications 1 à 8, **caractérisé en ce que** le corps de traction est constitué comme une courroie de traction en forme de bande qui peut être renvoyée ou est renvoyée autour d'une poulie de renvoi (2) sur son côté plat transversalement à sa direction d'extension longitudinale (1).

10. Corps de traction selon l'une quelconque des revendications 1 à 9, **caractérisé en ce que** chaque zone de choc (7,12,18) de chaque agencement d'éléments de traction (3,8,15) est disposée décalée dans la direction d'extension longitudinale (1) par rapport à toutes les autres zones de choc (18) des autres agencements d'éléments de traction (3,8,15) de telle manière que chaque zone de choc (7,12,18) est chevauchée par un élément de traction (4,9,17) de chaque autre agencement d'éléments de traction (3,8,15) et est reliée par conformité de force.

11. Corps de traction selon l'une quelconque des revendications 1 à 10, **caractérisé en ce qu'**un agencement d'éléments de traction (3,8,15), notamment chaque agencement d'éléments de traction (3,8,15), est relié latéralement pour l'essentiel le long de toute la longueur de ses éléments de traction (4,9,17), complètement ou par section, à un/d'autres agencement(s) d'éléments de traction (3,8,15) limitrophes ou **en ce que** deux agencements d'éléments de traction (3,8,15) reliés l'un à l'autre sont reliés latéralement l'un à l'autre pour l'essentiel le long de toute la longueur de leurs éléments de traction (4, 9, 17) .

12. Corps de traction selon l'une quelconque des revendications 1 à 11, **caractérisé en ce que** les éléments de traction (4,9,17) d'un agencement d'éléments de traction (3,8,15) comportent respectivement au moins une surface de liaison (20) passant le long de la direction d'extension longitudinale (1) sur les côtés extérieurs des éléments de traction (4,9,17), sur laquelle l'agencement d'éléments de traction (3,8,15) est relié avec un autre agencement d'éléments de traction (15) et **en ce que** la surface de liaison (20) est constituée de préférence pour l'essentiel sous la forme d'un plan et/ou plane.

13. Corps de traction selon la revendication 12, **caractérisé en ce que** la surface de liaison plane (20) d'un agencement d'éléments de traction (3,8,15) est reliée par un corps de liaison (19) à la surface de liaison plane (20) d'un autre agencement d'éléments de traction (15).

14. Corps de traction selon l'une quelconque des revendications 1 à 13, **caractérisé en ce qu'**un élément de traction (4,9,17) du premier agencement d'éléments de traction (3) est relié latéralement à deux éléments de traction (4,9,17) d'un deuxième agencement d'éléments de traction voisin (8) de telle manière que la zone de choc (7,12,18) du deuxième agencement d'éléments de traction (8) est chevauchée par l'élément de traction (4,9,17) du premier agencement d'éléments de traction (3) et est reliée par conformité des forces.

15. Corps de traction selon l'une quelconque des revendications 1 à 14, **caractérisé en ce que** deux ou plusieurs agencements d'éléments de traction (3,8,15) sont reliés entre eux par un autre agencement d'éléments de traction (15).
